# EUROPÄISCHE PATENTANMELDUNG

(11) **EP 3 000 565 A2**
(43) Veröffentlichungstag der Anmeldung: **30.03.2016**
(21) Anmeldenummer: 15186675.3
(22) Anmeldetag: 24.09.2015
(51) Int. Cl.: B25J 9/00, B25J 9/04, B25J 9/10

(54) **ROBOTER UND DARAUS BESTEHENDE ROBOTERSTRASSE SOWIE VERFAHREN ZUM STEUERN DES ROBOTERS**

(30) Priorität: 25.09.2014 DE 102014113906; 12.02.2015 DE 102015102014
(71) Anmelder: Gerhard Schubert GmbH, 74564 Crailsheim (DE)
(72) Erfinder: Fohrer, Kurt, 74564 Crailsheim (DE)
(74) Vertreter: Weickmann & Weickmann

(57) **Zusammenfassung**

Um Roboter (50) innerhalb einer Roboterstraße (100) zum Umsetzen von einzelnen Produkten (P) in Trays (T) möglichst nahe beieinander anordnen zu können und dadurch die Länge der Roboterstraße (100) zu reduzieren, wird erfindungsgemäß vorgeschlagen, bei einem Roboterarm (10), bei dem Oberarm (5), Unterarm (6) und Roboter-Hand (7) jeweils um zueinander parallele Haupt-Schwenkachsen (1, 2, 3) verschwenkbar sind, die Roboter (50) mit diesen Haupt-Schwenkachsen (1, 2, 3) in Durchlaufrichtung (X') der Produkte (P) anzuordnen und zusätzlich jeden der Roboterarme (10) um eine Quer-Schwenkachse (12) in oder entgegen der Durchlaufrichtung (X') begrenzt verschwenken zu können.

## Beschreibung

Die Erfindung betrifft Roboter, wie sie beispielsweise zum Ergreifen von Produkten und Ablegen an einer anderen, vorgegebenen Stelle, verwendet werden.

Ein typischer Anwendungsfall solcher Roboter sind Roboter-Straßen zum Umsetzen von Produkten, die beispielsweise unregelmäßig auf einem Produktband angeliefert werden.

Diese Produkte sollen - meist einzeln - von einem Roboter ergriffen und umgesetzt werden in eine Ablageposition,
- beispielsweise in eine Ablageposition in einem Tray, der in der Nähe des Produktbandes zur Verfügung gestellt wird, beispielsweise auf einem Tray-Band oder einer Tray-Kette dargeboten wird,
- oder in eine Ablageposition auf einem Ablageband, auf dem Produkte definiert einzeln oder gruppiert angeordnet werden sollen,
- oder auch auf einem stehenden oder diskontinuierlich laufenden Transportmittel oder Verpackungsmaterial auf dem Produkte definiert einzeln oder gruppiert angeordnet werden sollen.

Bei solchen Roboter-Straßen befinden sich entlang des Produktbandes in einer oder auch zwei parallelen Reihen mehrere solcher Roboter.

### II. Technischer Hintergrund

Das Ziel besteht darin, eine möglichst hohe Umsetzrate von Produkten zu erreichen unter Einhaltung von diversen Randbedingungen je nach Anwendungsfall und möglichst keine verbleibenden Produkte auf dem Produktband nach Verlassen des Umsetzbereiches.

Die Position der Produkte und ggf. bei unrunden Produkten auch deren Drehlage, wird von einem quer über das Produktband verlaufenden Scanner vor Einlaufen der Produkte in den Umsetzbereich ermittelt und über die Steuerung den Robotern zur Verfügung gestellt, die sich oberhalb des Produktbandes befinden, beispielsweise hängend befestigt an einem sog. aufgeständerten Roboterhimmel, wobei der Arbeitsbereich jedes Roboters zumindest einen Teilbereich des Produktbandes als auch mindestens eine der Ablagepositionen umfasst.

Natürlich erhöht sich die Umsetzrate mit der Anzahl eingesetzter Roboter.

Allerdings vergrößert die Anzahl der eingesetzten Roboter auch die Länge der Roboter-Straße, weshalb das Bestreben besteht, in Durchlaufrichtung der Produkte, also in Längsrichtung der Roboter-Straße, pro Längeneinheit möglichst viele Roboter unterzubringen, da sowohl die eingesparten Raumkosten als auch eingesparte Kosten für Transport- und Verkettungseinrichtungen Vorteile einer möglichst kurzen Roboter-Straße sind.

Dies erfordert einerseits eine möglichst schmale Bauform der Roboter in Längsrichtung der Roboter-Straße als auch eine gute Gesamtsteuerung der Roboter-Straße, um Kollisionen der Roboterarme benachbarter Roboter zu vermeiden, falls sich deren Arbeitsbereiche überlappen, was für eine hohe Umsetzrate jedoch häufig erforderlich ist.

In diesem Zusammenhang sind unterschiedliche Bauformen an Robotern bekannt, wobei jedoch zu berücksichtigen ist, dass
- der konstruktive Aufwand und damit der Preis für jeden zusätzlichen Freiheitsgrad des Roboters steigt,
- die Bewegungsgeschwindigkeit des Roboters bei gleicher Antriebsleistung mit zunehmender Masse der bewegten Teile des Roboters abnimmt oder durch eine höhere Antriebsleistung kompensiert werden muss.

So ist zum Umsetzen relativ kleiner und leichter Produkte von der Anmelderin ein sog. "F4-Roboter" bekannt, bei dem sich ein aus Oberarm und Unterarm bestehender Roboterarm in einer horizontalen Armebene unterhalb einer Motor-/Getriebeeinheit bewegt, die die Bewegungen des Roboterarmes antreibt. Neben dieser Bewegungsmöglichkeit in der horizontalen Ebene, die die beiden ersten Freiheitsgrade darstellt, ist am freien Ende des Unterarmes ein vertikal gegenüber dem Unterarm beweglicher Picker angeordnet (dritter Freiheitsgrad), der in seiner Führung gegenüber dem Unterarm auch gedreht werden kann (vierter Freiheitsgrad), um in der Aufsicht unrunde Produkte in die richtige Drehlage vor dem Ablegen in einem Tray zu bringen.

Wegen der Bewegung des Roboterarmes in einer horizontalen Ebene ist zwar dessen in der Aufsicht betrachteter Arbeitsbereich groß, jedoch auch der zwischen zwei benachbarten Robotern einzuhaltende Mindest-Montageabstand wegen des im Betrieb oft nach außen sogar über den Greifbereich des Roboters vorstehenden Ellbogen-Gelenkes zwischen Oberarm und Unterarm.

Natürlich gibt es in der maximalen Ausführung in der Industrie Roboterarme mit sechs Freiheitsgraden, nämlich Bewegungsmöglichkeit in alle drei Raumrichtungen und Drehbarkeit um alle drei Raumrichtungen, jedoch wird dies für das beschriebene Umsetzen von Produkten in einer Roboter-Straße in der Regel nicht benötigt.

Hier genügen meist neben der Bewegung in den drei Raumrichtungen die Drehbarkeit um eine vertikale Achse und ggf. - je nach Anwendungsfall - die Drehbarkeit um eine horizontale Achse, beispielsweise wenn flach auf dem Behälterband liegende Produkte aufgenommen und in einem Tray schräg stehend, also gestaffelt, abgelegt werden sollen.

Um den konstruktiven Aufwand als auch die Anzahl von Antriebsmotoren sowie die bewegte Masse gering zu halten, werden selbstverständlich nur die benötigten Freiheitsgrade an einem hierfür vorgesehenen Roboter realisiert.

### III. Darstellung der Erfindung

### a) Technische Aufgabe

Es ist daher die Aufgabe gemäß der Erfindung, einen Roboter zu schaffen, der kompakt ausgebildet ist, vor allem betrachtet quer zur Haupt-Schwenkachse des Roboterarmes gegenüber einem ortsfesten Teil, und dennoch bei möglichst einfachem konstruktiven Aufbau die benötigten mindestens vier Freiheitsgrade aufweist. In einer Roboter-Straße wird ein in Durchlaufrichtung der Produkte möglichst geringer Abstand von Roboter zu Roboter angestrebt.

### b) Lösung der Aufgabe

Diese Aufgabe wird durch die Merkmale der Ansprüche **1, 15** und **18** gelöst. Vorteilhafte Ausführungsformen ergeben sich aus den Unteransprüchen.

Ein gattungsgemäßer Roboter hat eine ortsfesten Basis, gegenüber der ein Roboterarm mit Oberarm, Unterarm und Werkzeughand verschwenkbar ist, wobei zwischen jedem der genannten Paare dieser Einzelteilen eine Verschwenkung um eine Haupt-Schwenkachse möglich ist und diese Haupt-Schwenkachsen in der Regel jeweils parallel zueinander verlaufen.

Bei einem solchen gattungsgemäßen Roboterarm ist erfindungsgemäß entweder der Unterarm relativ zum Oberarm zusätzlich verschwenkbar um eine Querschwenkachse, die quer zu der Haupt-Schwenkachse zwischen diesen beiden Armteilen verläuft und insbesondere parallel zu der Armebene, die definiert ist als die Bewegungsebene des nur um die Haupt-Schwenkachsen verschwenkbaren Roboterarmes.

Oder der Oberarm ist relativ zur ortsfesten Basis zusätzlich zur Hauptschwenkachse um eine quer dazu stehende Querschwenkachse verschwenkbar, die ebenfalls wiederum insbesondere parallel zu der Armebene verläuft.

Beide Möglichkeiten können auch kombiniert werden.

Durch eine solche Ausbildung des Roboterarmes hat der Roboter einen Greifbereich (innerhalb einer Greifebene, die parallel zu der Haupt-Schwenkachse liegt, um die der Roboterarm gegenüber seiner ortsfesten Basis verschwenkbar ist) der in Erstreckungs- Richtung der sog. Armebene, also quer zur Haupt-Schwenkachse, sehr groß ist, abhängig von der Länge von Oberarm, Unterarm und Werkzeughand, in Richtung der Haupt-Schwenkachsen jedoch nur eine begrenzte Erstreckung hat, abhängig vom gewünschten Anwendungszweck und der konstruktiven Ausgestaltung.

In Richtung der Haupt-Schwenkachse hängt die Größe des Greifbereichs von dem möglichen Schwenkwinkel um die Quer-Schwenkachse ab, jedoch ergibt sich dadurch ein rechteckiger Greifbereich, und somit besitzt der Greifbereich in Richtung der Haupt-Schwenkachse überall, auch in den von der Befestigung des Roboterarmes an seiner ortsfesten Basis maximal entfernten Teil, die gleiche Erstreckung.

Dies ist ein erheblicher Vorteil gegenüber beispielsweise Robotern mit Oberarm und Unterarm und einer quer zur Armebene ausfahrbaren Werkzeughand, bei denen die Greifebene lotrecht zur Hauptschwenkachse liegt oder sogenannten Delta-Robotern:
Denn bei diesen Bauformen ist der Greifbereich rund, so dass eine möglichst flächendeckende Anordnung mehrerer Greifbereiche benachbarter Roboter zueinander schwierig ist. Deshalb müssen bei solchen Roboterbauformen die theoretischen Greifbereiche zueinander stark überlappend angeordnet werden, aber entweder eine aufwändige Kollisionsverhinderung in der Steuerung implementiert werden oder große Überlappung-Bereiche des theoretischen Greifbereiches deaktiviert werden, so dass der praktisch nutzbare tatsächliche Greifbereich, der Arbeitsbereich, sehr klein wird

Die flächendeckende, lückenlose Anordnung rechteckiger Greifbereiche nebeneinander bereitet dagegen keinerlei Schwierigkeiten.

Zusätzlich steht in Richtung der Haupt-Schwenkachsen der Arm in keiner Stellung über die Erstreckung des Greifbereiches in Richtung der Haupt-Schwenkachsen vor, sodass in dieser Richtung Kollisionen mit außerhalb des Greifbereichs angeordneten Bauteilen oder benachbarten Robotern von vornherein ausgeschlossen sind, falls sich die benachbarten Greifbereiche nicht überlappen, sodass der Greifbereich in dieser Richtung identisch ist mit einem bei der Anordnung eines solchen Roboters wichtigen Kollisionsbereichs, innerhalb dessen Kollisionen dieses Roboters mit in den Kollisionsbereich hineinragenden Elementen möglich wären.

Dadurch können derartige erfindungsgemäße Roboter auch eng benachbart zueinander eingesetzt werden.

Die ortsfeste Basis, gegenüber der der Roboterarm, insbesondere dessen Oberarm, verschwenkbar um die Hauptschwenkachse ist, ist in der Regel ein Getriebekasten, von dem aus auch die Bewegungen des Unterarmes und der Werkzeughand bewirkt werden, vorzugsweise über exzentrisch an deren Haupt-Schwenkachsen und Zusatz-Schwenkachsen angreifenden Anlenkstreben, die mit dem Getriebekasten wirkverbunden sind.

Höchstens in der Werkzeughand ist ein Motor angeordnet, der jedoch vorzugsweise benutzt wird, um eine dritte Schwenkachse - meist ausgebildet als Drehachse, die eine Drehung um volle **360°** oder mehr ermöglicht - in der Werkzeughand zu betätigen, die einen geringen Kraftaufwand erfordert.

Dadurch können die zu beschleunigenden Massen des Roboterarmes gering gehalten werden und eine hohe Arbeit-Geschwindigkeit des Roboterarmes erreicht werden.

Falls der Oberarm gegenüber der ortsfesten Basis, z.B. dem Getriebekasten, quer verschwenkbar ausgebildet sein soll, wird die zur Hauptschwenkachse quer stehende zusätzliche Schwenkachse realisiert, indem die Verbindung zwischen Oberarm und ortsfester Basis als Kreuzgelenk ausgeführt ist.

Falls der Unterarm gegenüber dem Oberarm quer zur Armebene verschwenkbar sein soll, kann der Unterarm gegenüber dem Oberarm um seine Hauptschwenkachse mittels zwei zueinander fluchtender und unabhängig voneinander drehbar antreibbarer Lagerzapfen gelagert sein, die in entsprechenden zueinander fluchtenden Lagerbuchsen des vorzugsweise gabelförmigen Endes des Oberarmes gelagert sind.

Diese beiden Lagerzapfen können unabhängig voneinander um ihre Drehachse gedreht werden, indem von jedem Lagerzapfen ein Anlenkhebel radial absteht und mit dem Lagerzapfen drehfest verbunden ist, und an jedem Anlenkhebel je eine Anlenkstrebe angreift, die mit dem Getriebekasten verbunden sein kann. Zusätzlich sind die beiden Lagerzapfen miteinander wirkverbunden.

Dies ergibt eine mechanisch einfache, sehr langlebige und leichte Konstruktion.

Dabei sind unterschiedliche Ausbildungen des aus der Armebene ausschwenkbaren Armteiles, insbesondere des Unterarmes, möglich:
Eine erste Möglichkeit besteht darin, dass dieser z. B. Unterarm aus zwei etwa parallel verlaufenden Unterarmteilen besteht, von denen jeder an einem Ende gegenüber einem der Lagerzapfen, die im Oberarm gelagert sind, um eine quer, insbesondere lotrecht, zur Hauptschwenkachse stehende zusätzliche Quer-Schwenkachse verschwenkbar ist, und die beiden anderen Enden der Unterarmteile miteinander verbunden sind über die Werkzeughand. Diese ist beidseits über je eine Quer-Ausgleichsachse, welche dieselbe Richtung hat wie die Quer-Schwenkachse am anderen Ende des Unterarmes, in einem der Unterarmteile gelagert. Dadurch bilden die beiden etwa parallel zueinander verlaufenden Unterarmteile ein Parallelogramm. Durch Auslenken des Parallelogramms quer zur Armebene kann die Werkzeughand quer zur Armebene verschwenkt werden.

Die Wirkverbindung hinsichtlich der Drehung um die Hauptschwenkachse besteht durch die Verbindung der beiden Unterarmteile über die Werkzeughand.

Zusätzlich steht jeder der beiden mit dem je einen Lagerzapfen drehfest verbundenen Anlenkhebel in Wirkverbindung hinsichtlich seiner Drehung mit einem mit der Quer-Schwenkachse des Unterarmes drehfest verbundenen Quer-Schwenkhebel, indem diese beiden vorzugsweise über eine ZahnradPaarung, z.B. eine Kegelzahnrad-Paarung, miteinander verbunden sind.

Durch synchrones Verschwenken der beiden Anlenkhebel wird der Unterarm um seine Hauptschwenkachse verschwenkt. Durch unsynchrones und insbesondere gegenläufig synchrones Verschwenken der beiden Anlenkhebel werden die beiden Teile des Unterarmes um den gleichen Winkelbetrag um die Quer-Schwenkachse und damit aus der Armebene heraus verschwenkt.

Der Grundkörper der Werkzeughand ist schwenkbar um eine Hauptschwenkachse zwischen den beiden Unterarmteilen gelagert, über je von einer Seite des Grundkörpers abstrebenden Quer-Schwenkzapfen, der gegenüber dem Grundkörper um die Hauptschwenkachse verschwenkbar ist und gleichzeitig gegenüber dem Unterarm um eine dazu querstehende Ausgleichs-Schwenkachse. Die Stellung des Grundkörpers wird durch eine exzentrisch zu der Hauptschwenkachse am Grundkörper angreifende Anlenkstrebe bestimmt. Diese Anlenkstrebe ist über Anlenkhebel um die Hauptschwenkachse zwischen Oberarm und Unterarm und eine weitere Anlenkstrebe vom Getriebekasten aus angetrieben.

Dadurch wird der Grundkörper unabhängig von der seitlichen Auslenkung des Unterarmes quer zur Armebene immer in der gleichen Drehlage um seine Hauptschwenkachse gehalten.

Die gleiche Anordnung könnte natürlich auch an der Verbindungsstelle zwischen Oberarm und dem ortsfesten Basis, etwa dem Getriebekasten, eingesetzt werden, um den Oberarm quer zur Armebene verschwenken zu können.

Eine zweite Möglichkeit besteht darin, dass das quer zur Armebene ausschwenkbare Armteil, z.B. der Unterarm, ein einteiliger Unterarm ist, also nicht aus zwei etwa parallel zueinander verlaufenden Unterarm-Teilen besteht, die miteinander zu einem Gelenk-Parallelogramm verbunden sind.

Bei einer Lösung mit einem einteiligen, aus der Armebene heraus verschwenkbaren, Unterarm wird die Verschwenkung des Unterarmes anders bewirkt als bei der ersten Untervariante:
An der Basis des Roboters, die meist ortsfest im Gestell der Maschine montiert ist, dem sogenannten Getriebekasten, sind in Längsrichtung, also der Richtung der ersten Hauptschwenkachse, um die der Oberarm gegenüber diesem Getriebekasten verschwenkbar ist, beabstandet zueinander zwei Antriebshebel vorhanden, die unabhängig voneinander wiederrum um eine parallel zur ersten Hauptschwenkachse verlaufende oder gar mit dieser identischen, ersten Haupt-Antriebsachse verschwenkbar sind.

Jeder dieser Antriebshebel ist - beabstandet von der Haupt-Antriebsachse, um die er schwenkbar ist - gelenkig mit dem einen Ende einer Anlenk-Strebe verbunden, die mit ihrem anderen Ende gelenkig am Unterarm befestigt ist, und zwar an einer Stelle des Unterarmes, die beabstandet ist von der zweiten Haupt-Schwenkachse, um welche der Unterarm gegenüber dem Oberarm schwenkbar befestigt ist, vorzugsweise jedoch nicht an oder nahe dem vom Oberarm abgewandten Ende des Unterarmes, sondern eher in dessen mittleren Bereich.

Betrachtet man den Unterarm in seiner Verlaufsrichtung, so greifen die beiden Anlenk-Streben aus unterschiedlichen Richtungen am Unterarm an, wobei die beiden Angriffsrichtungen um weniger als 180°, vorzugsweise um 35° - 100°, hier um 40° - 70°, zu einander liegen.

Auch bei dieser Lösung ist am dem vom Oberarm abgewandten, sogenannten freien, Ende, des Unterarmes eine sogenannte Werkzeughand gelenkig befestigt, die einerseits um die dritte Hauptschwenkachse gegenüber dem Unterarm verschwenkbar ist und zusätzlich um eine parallel zur Quer-Schwenkachse 12 verlaufende Quer-Ausgleichsachse 13.

Da der Unterarm zum Oberarm zusätzlich zur zweiten Hauptschwenkachse um eine dazu im Winkel stehende, vorzugsweise im rechten Winkel stehende, Quer-Schwenkachse gelenkig befestigt ist, kann durch unterschiedliches Ansteuern der beiden Antriebshebel der Unterarm relativ zur Armebene seitlich verschwenkt werden. Werden die beiden Antriebshebel dagegen synchron bewegt, also verschwenkt um ihre Haupt-Antriebsachse, so wird dadurch der Unterarm gegenüber dem Oberarm lediglich um seine zweite Haupt-Schwenkachse verschwenkt.

Für eine gute Übersetzung des Schwenkwinkels der Antriebshebel relativ zur gewünschten Querverschwenkung des Unterarmes sind die beiden Antriebshebel auf den in Längsrichtung voneinander abgewandten Seiten des Getriebekastens angeordnet, so dass sie einen relativ großen Abstand zueinander besitzen.

Vorzugsweise besitzt der Getriebekasten in dieser Längsrichtung eine erhebliche Erstreckung, indem in dem Getriebekasten drei Motore, vorzugsweise drei, insbesondere identisch ausgebildete, Motor-Getriebe-Einheiten angeordnet sind und zwar vorzugsweise in Längsrichtung hintereinander.

Unabhängig von der Anordnung dieser drei Motoren oder Motor-Getriebe-Einheiten verschwenkt je einer davon je einen der beiden Antriebshebel, und der dritte den Oberarm.

Die am sogenannten freien Ende des Unterarmes befestigte Werkzeughand, die ja ihrerseits am freien Ende in der Regel eine Werkzeugaufnahme trägt, soll ja unabhängig von der Schwenkstellung des Unterarmes, auch wenn dieser aus der Armebene heraus verschwenkt ist, immer die gleiche Orientierung im Raum aufweisen, also bei einer länglichen Werkzeughand soll beispielsweise die Haupterstreckungsrichtung der Werkzeughand immer lotrecht stehen.

Um dies zu erreichen, besteht eine der Möglichkeiten der Befestigung und Ansteuerung der Werkzeughand am Unterarm darin, dass an einem oder vorzugsweise an beiden Enden des Unterarmes entweder ein mindestens einfaches Kardangelenk, gegebenenfalls ein doppeltes Kardangelenk, oder ein Kugelgelenk vorhanden ist, mit dem am Unterarm am freien Ende die Werkzeughand und/ oder am anderen Ende der Oberarm befestigt ist. Die genaue konstruktive Ausführung ist in den Figuren beschrieben.

Angesteuert wird das die Werkzeughand tragende Kardangelenk oder Kugelgelenk vom anderen Ende des Oberarmes aus durch ein Oberarm-Parallelogramm, von dem der Oberarm eine der beiden Oberarm-Parallelogramm-Streben darstellt, welches ebenfalls anhand der Zeichnungen näher erläutert wird.

Die am freien Ende der Werkzeughand befestigte Werkzeugaufnahme soll ja drehend um die Längsachse der Werkzeughand antreibbar sein. Will man zu diesem Zweck keinen Motor direkt in der Werkzeughand anordnen, um dessen Masse gering zu halten, so erfolgt der Antrieb vom Getriebekasten aus, indem entlang oder in dem dann hohlen Unterarm eine erste Antriebswelle verläuft, die um ihre Längserstreckung drehbar ist.

Der Antrieb durch das Oberarm-Parallelogramm hindurch erfolgt in der Regel so, dass in der zum Oberarm parallelen Oberarm-Parallelogramm-Strebe ein Riemen, insbesondere ein Zahnriemen, endlos umläuft, der von dem im Getriebekasten vorhandenen Werkzeug-Antriebsmotor aus angetrieben wird und der seinerseits entweder einen weiteren Zahnriemen oder eine weitere Antriebswelle antreibt, die im Inneren einer hohlen Anlenk-Strebe angeordnet ist und mit der Antriebswelle im Unterarm verbunden ist. Dabei verbindet die hohle Anlenk-Strebe den Oberarm mit der dazu parallelen Oberarm-Parallelogramm-Strebe, die ebenfalls Teil des Oberarm-Parallelogramms ist. Durch die spezifische Befestigung und Ansteuerung der Werkzeughand wird erreicht, dass diese Anlenk-Strebe zwischen Oberarm und Oberarm-Parallelogramm-Strebe immer die gleiche Orientierung besitzt wie die Werkzeughand.

Das **Verfahren** zum Steuern des Roboters und insbesondere der Bewegung seines Roboterarmes besteht somit darin, dass
a) Zum Bewegen der Werkzeughand entlang eines definierten Weges in der Armebene, der Y-Z-Ebene, wird die Drehung des Oberarmes um seine Hauptschwenkachse und die Drehung des Unterarmes gegenüber dem Oberarm um seine Hauptschwenkachse gesteuert relativ zueinander vollzogen.
b) Zum Verschwenken des Roboterarmes aus der Armebene heraus wird entweder der Oberarm gegenüber der Hauptschwenkachse zusätzlich um eine Quer-Schwenkachse verschwenkt und/oder der Unterarm gegenüber dem Oberarm um eine solche Quer-Schwenkachse verschwenkt,
c) Zum Bewegen der Werkzeughand relativ zum Unterarm um die Hauptschwenkachse wird die Werkzeughand aktiv um die Hauptschwenkachse verschwenkt.

Durch gleichzeitige oder zeitlich überlappende oder auch zeitlich nacheinander ablaufende Durchführung dieser Bewegungen kann die Roboterhand jeden beliebigen Punkt innerhalb des dreidimensionalen Greifbereiches anfahren und dabei die gewünschte Drehlage für die notwendige Anwendung einnehmen.

Vorzugsweise werden dabei sämtliche Bewegungen von Oberarm, Unterarm und dem Grundkörper der Werkzeughand von dem Getriebekasten aus bewirkt, was den Vorteil hat, dass im Roboterarm keine Antriebsquellen wie Motore, Pneumatik- oder Hydraulikzylinder etc. angeordnet werden müssen, und der gesamte Roboterarm mit den genannten Teilen Oberarm, Unterarm und Grundkörper der Werkzeughand rein mechanisch aufgebaut ist.

Hierfür sind mit dem Getriebekasten drei Motoren, in der Regel Elektromotoren, oder Motor-Getriebe-Einheiten, die vorzugsweise identisch ausgebildet sind, wirkverbunden, insbesondere außen an dem Getriebekasten angeflanscht, von denen
- der eine Motor den Oberarm in seiner Schwenkbewegung um die Hauptschwenkachse gegenüber der ortsfesten Basis, z.B. dem Getriebekasten, antreibt,
- die beiden anderen Motoren die Schwenkbewegung je eines der beiden Schwenkzapfen zwischen Oberarm und Unterarm antreiben.

Bei einem aufgehängten Roboter, bei der die Roboterhand auf einer Ebene unterhalb des Getriebekastens arbeiten soll, kann die Werkzeughand auch Positionen anfahren, die in der Aufsicht von oben betrachtet unterhalb des Getriebekastens liegen. Der Getriebekasten bewirkt also keine Abschattung auf der Arbeitsebene.

Die Anlenk-Streben, mit denen die Übertragung des Antriebs vom Getriebekasten zu den einzelnen beweglichen Teilen des Roboterarmes bewirkt wird, befinden sich - betrachtet in Richtung der ersten Haupt-Schwenkachse - bei Oberarm und Unterarm vorzugsweise auf der gleichen Seite. Dann können Oberarm und Unterarm zueinander auf derjenigen Seite, auf der sich die Anlenk-Streben befinden, in der Regel nicht über den gestreckten Zustand hinaus bis zu einem Zwischenwinkel von wesentlich weniger als **180°,** maximal bis **160°,** zueinander verschwenkt werden. Deshalb nehmen Oberarm und Unterarm auf der von den Anlenk-Streben abgewandten Seite in der Regel einen spitzen Zwischenwinkel zwischen sich ein.

Falls die Übertragung des Antriebs vom Getriebekasten zu den einzelnen beweglichen Teilen des Roboterarmes jedoch anders gelöst wird, beispielsweise in Blickrichtung der ersten Haupt-Schwenkachse vor oder hinter dem Oberarm und Unterarm oder innerhalb von Oberarm und Unterarm, kann der Schwenkbereich des Unterarmes zum Oberarm auch über die gestreckte Stellung hinaus gehen, und ausgehend von der gestreckten Stellung in beide Richtungen sogar über jeweils **90°** oder gar **120°** hinausgehen.

Eine sehr kompakt bauende Lösung des Getriebekasten und seines Abtriebes besteht darin, dass um die Abtriebswelle des Getriebekastens herum konzentrisch ineinander und relativ zueinander verdrehbare Abtriebshülsen vorhanden sind, von denen Abtriebswelle und die umgebenden Abtriebshülsen jeweils mit einem von mehreren axial hintereinander angeordneten Zahnrädern innerhalb des Getriebekastens in Verbindung stehen, von denen jedes von einem der drei Motoren über ein Ritzel angetrieben wird.

Am anderen Ende ist die Abtriebswelle und jede der Abtriebshülsen mit je einem drehfest damit verbundenen, radial abstrebenden Antriebshebel ausgestattet, mit dem jeweils das hintere Ende eines der Anlenkstreben für die beschriebenen Armbewegungen gelenkig verbunden ist.

Aus den beschriebenen Robotern lässt sich eine sehr kompakte Roboterstraße zusammenstellen, um Produkte, die auf einem in Transportrichtung laufenden Produktband angeliefert werden, z.B. in Trays, die in einer Behälterzone zur Verfügung gestellt werden, umzusetzen, wobei die Roboter mit ihren Armebenen quer, insbesondere lotrecht, zur Transportrichtung der Produkte und gegebenenfalls der Behälter angeordnet werden.

Da bei dieser Anordnung die Roboterarme in dieser Transportrichtung in keiner Stellung des Roboterarmes über den Greifbereich, auch nicht den innerhalb davon eingestellten Arbeitsbereich, des jeweiligen Roboters hinaus vorstehen, können die einzelnen Roboter in Transportrichtung sehr gering zueinander beabstandet angeordnet werden und auch die Erstreckung der Arbeitsbereiche der Roboter in Transportrichtung kann je nach Anwendungsfall so gering wie möglich gewählt werden und ist nicht von der konstruktiven Ausbildung, zum Beispiel der Länge, der Teile des Roboterarmes abhängig.

Dadurch kann bei gleicher Anzahl unterzubringender Roboter gegenüber anderen Roboter-Bauformen und Roboter-Anordnungen die Länge der Roboterstraße geringer gehalten werden.

Hierzu müssen natürlich sowohl mindestens Teile zumindest einer der Behälterzonen als auch Teile des Produktbandes im Arbeitsbereich jedes der Roboter liegen.

Vorzugsweise wird dabei der Getriebekasten jedes Roboters an der Unterseite eines aufgeständerten Roboterhimmels oberhalb oder seitlich oberhalb des Produktbandes montiert. Der so genannte Roboterhimmel kann dabei aus Tragstreben bestehen, die in Transportrichtung oder quer dazu verlaufen, und der Roboterhimmel muss keine durchgehende Ebene bilden.

Vorzugsweise kann beidseits des Produktbandes seitlich jeweils eine Behälterzone angeordnet sein, insbesondere ein parallel, jedoch vorzugsweise in Gegenrichtung hierzu verlaufendes Trayband oder ein anderer Trayförderer. Vorzugsweise ist dann auch parallel zum jeweiligen Rand des Produktbandes jeweils eine in Transportrichtung verlaufende Reihe von Robotern angeordnet, was eine sehr hohe Umsetzleistung in Relation zur Länge des Umsetzbereiches in Transportrichtung ergibt.

Dabei sollte der Arbeitsbereich jedes Roboters vorzugsweise die gesamte Breite des Produktbandes abdecken, gegebenenfalls sogar die vom jeweiligen Roboter weiter entfernte, also meist auf der gegenüberliegenden Seite des Produktbandes liegende, Behälterzone, beispielsweise einen entsprechenden Längen Abschnitt des Traybandes, abdecken.

Die Arbeitsbereiche benachbarter Roboter werden möglichst ohne Abstand aufeinanderfolgend angeordnet und können sich gegenseitig sogar überlappen, sofern die Steuerung der Roboterstraße, die auch die Bewegungen der einzelnen Roboterarme steuert, eine Kollisions-Verhinderungs-Steuerung enthält, um Kollisionen von benachbarten Roboterarmen im Überlappungsbereich deren Arbeitsbereiche zu verhindern.

Vorzugsweise werden die Roboter so angeordnet, dass deren Haupt-Schwenkachsen parallel zur Durchlaufrichtung des Produktbandes, der Transportrichtung, verlaufen, da dies die kompakteste Anordnungsmöglichkeit für die Roboter darstellt, von denen nur aufgrund spezieller Erfordernisse des Anwendungsfall des abgewichen werden sollte.

### c) Ausführungsbeispiele

Ausführungsformen gemäß der Erfindung sind im Folgenden beispielhaft näher beschrieben. Es zeigen:

In einer ersten Ausführungsform:
- Figur 1a:: den Roboter in perspektivischer Darstellung,
- Figur 1b, c:: Detaildarstellungen aus Figur 1a,
- Figur 2:: den Roboter in Blickrichtung der Haupt-Schwenkachsen, also in der Längsrichtung,
- Figur 3a:: den Roboter in Querrichtung im nicht ausgelenkten Zustand,
- Figur 3b:: den Roboter in Querrichtung im ausgelenkten Zustand,
- Figur 4:: eine Aufsicht auf eine Roboterstraße in der die Roboter gemäß den Figuren 1 - 3 eingesetzt sind,
in einer zweiten Ausführungsform:
- Figur 5a-d:: der Roboter in verschiedenen perspektivischen Darstellungen,
- Figur 6a - b:: der Roboter in verschiedenen Auslenk-Stellungen des Oberarmes,
- Figur 6c:: einen Vertikalschnitt durch den Getriebekasten,
In einer dritten Ausführungsform:
- Figur 7a:: der Roboter in perspektivischer Ansicht,
- Figur 7b,c:: Detailvergrößerungen aus Figur 7a,
- Figur 8a:: den Roboter der Figur 7a betrachtet in Längsrichtung X,
- Figur 8b, c:: den Roboter betrachtet in der Horizontalen quer zur Längsrichtung in unterschiedlichen Auslenkstellungen des Unterarmes,
- Figur 9a-c:: den Roboter in der Aufsicht betrachtet quer zur Längsrichtung in unterschiedlichen Auslenkstellungen des Unterarmes,
- Figur 9d:: einen horizontalen Schnitt durch den Getriebekasten entlang der Linie D-D in Figur 8a.

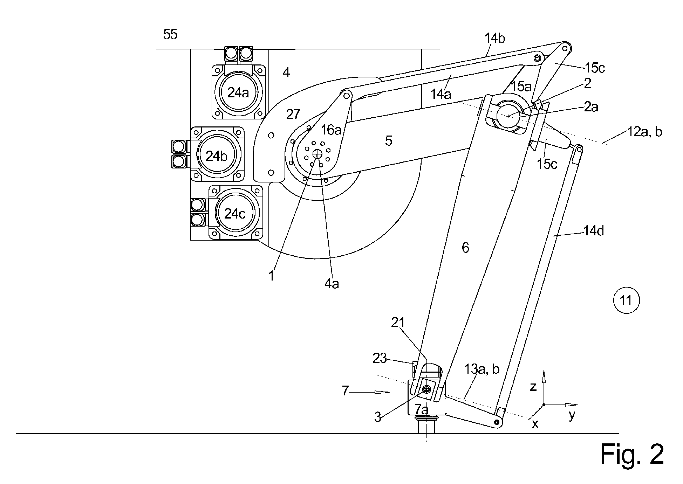

Für alle dargestellten Ausführungsformen gilt - wie am besten in **Figur 2** zu erkennen - dass der Oberarm **5** des Roboterarms um eine erste Haupt-Schwenkachse **1** gegenüber dem ortsfest montierten Getriebekasten **4** verschwenkbar ist, realisiert, wobei die Haupt-Schwenkachse **1** realisiert wird durch die Abtriebswelle **4**a des Getriebekastens **4.**

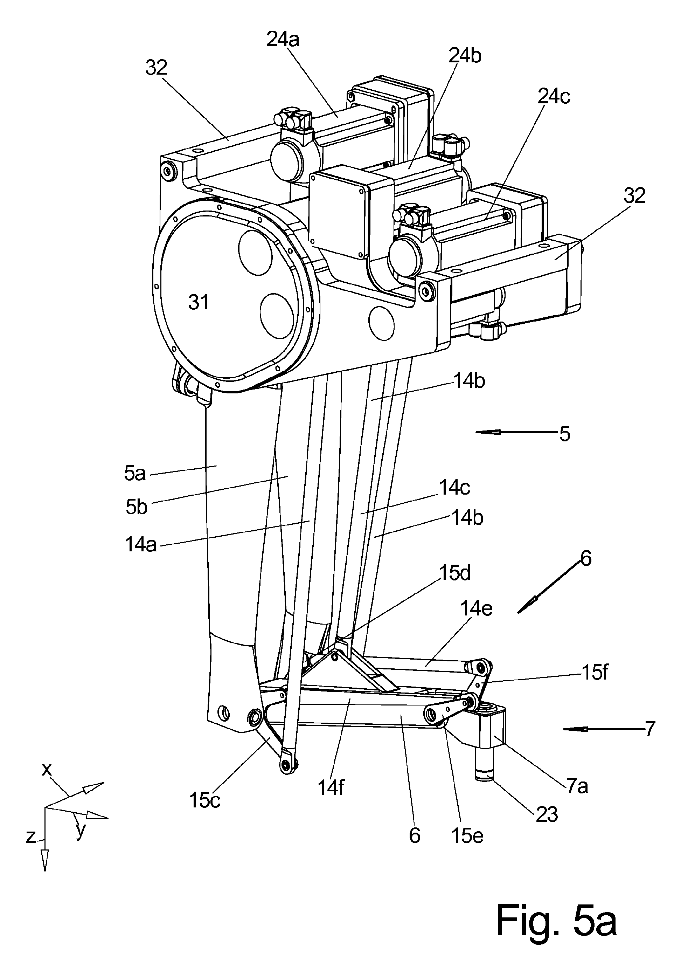

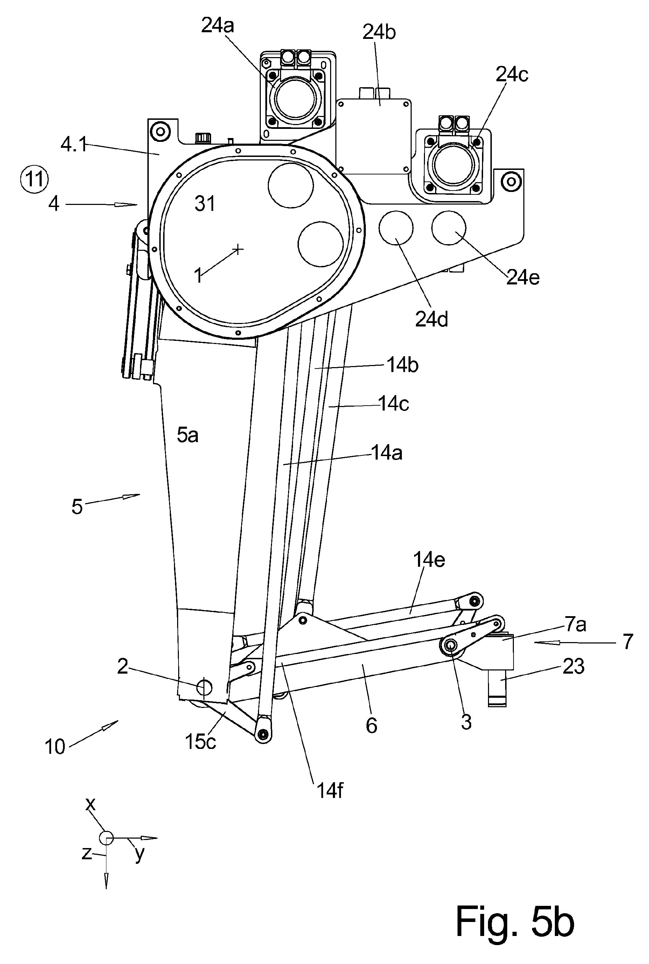

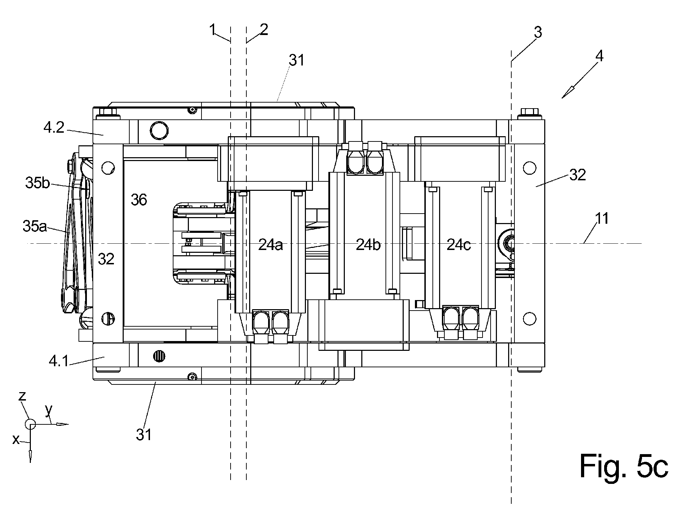

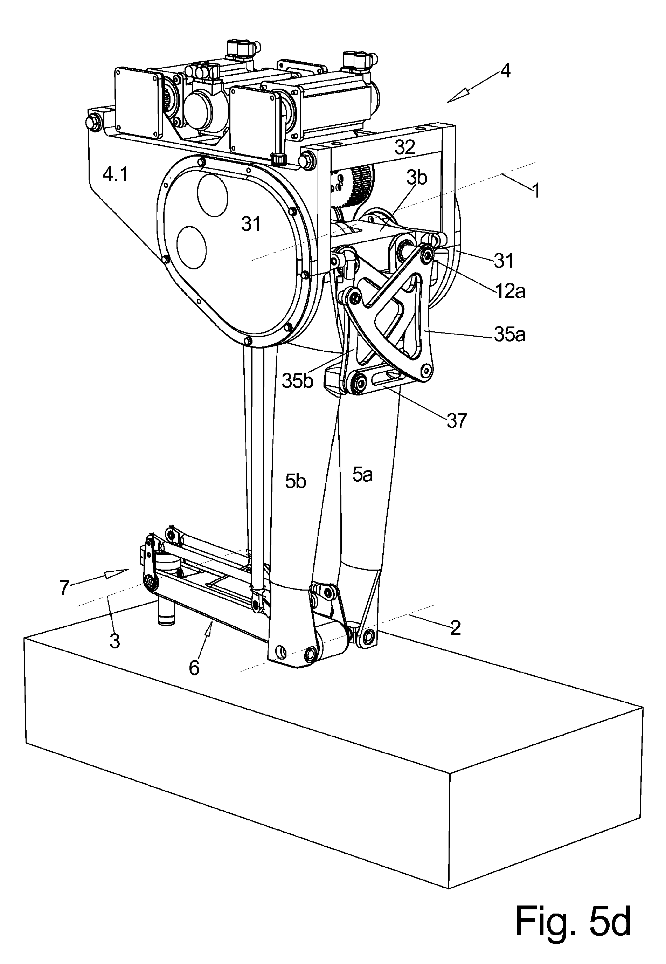

Am anderen Ende des Oberarmes **5** ist der Unterarm **6** schwenkbar um eine zweite Haupt-Schwenkachse **2** befestigt, die parallel zur ersten Schwenkachse 1 liegt. Realisiert ist die zweite Haupt-Schwenkachse **2** durch in Längsrichtung X fluchtend hintereinander angeordnete Lagerzapfen 2a, b, von denen in der Figur **2** und **5**a nur jeweils einer zu erkennen ist.

Am anderen, unteren Ende des Unterarmes **6** ist die sogenannte Werkzeughand **7,** die im Arbeitseinsatz ein (nicht dargestelltes) anwendungsspezifisches Werkzeug trägt, schwenkbar um eine dritte Haupt-Schwenkachse **3** gegenüber dem Unterarm **6** befestigt, und auch diese dritte Haupt-Schwenkachse **3** liegt parallel zur ersten Haupt-Schwenkachse **1** und zweiten Haupt-Schwenkachse **2.**

Die quer, insbesondere lotrecht auf den Haupt-Schwenkachsen **1, 2, 3** stehende Ebene wird als Armebene **11** oder Roboterebene bezeichnet, und das Ziel der Erfindung besteht darin, den Roboterarm **10** zusätzlich zu den Verschwenkmöglichkeiten um die drei Haupt-Schwenkachsen **1, 2, 3** aus dieser Armebene oder Roboterebene **11** heraus verschwenken zu können, entweder indem der Oberarm **5** oder der Unterarm **6** diesbezüglich verschwenkbar ist, oder beides.

In den **Figuren** sind die Achsen definiert, wie in den Figuren **2** und **5**a eingezeichnet, also
- X =: Längsrichtung, insbesondere in der horizontalen Ebene, Richtung der drei Haupt-Schwenkachsen **1, 2, 3**
- Y =: eine erste, insbesondere horizontale Querrichtung hierzu und
- Z =: die Lotrechte auf die x-y-Ebene, insbesondere die Vertikale.

Der Antrieb des Roboterarmes erfolgt von dem Getriebekasten **4** aus, indem drei Teller-Zahnräder um eine gemeinsame Zahnradachse im Getriebekasten **4** axial hintereinander angeordnet sind, und jedes der drei Zahnräder von einem der drei auf der in der Roboterebene **11** verlaufenden Außenseite des Getriebekastens angeordneten Motore **24**a-c aus angetrieben wird, vorzugsweise über jeweils ein Ritzel **25**a-c, die jeweils auf der Abtriebswelle eines der Motoren **24**a, b, c sitzen und mit je einer der Außenverzahnungen, die sich auf jedem der Zahnräder befinden, in Eingriff steht. Koaxial zu der Zahnradachse **26** ragt aus dem Getriebekasten **4** eine Abtriebswelle **4**a, konzentrisch umgeben von zwei weiteren Abtriebshülsen **4**b, c heraus, die von jeweils einem der Zahnräder drehfest verbunden sind und den Roboterarm **10** antreiben.

Die Motoren **24**a, b, c können mit ihrer Längsachse auch anders am Getriebekasten **4** angeordnet sein, beispielsweise in Figur **2** von der linken Endkante des Getriebekastens **1** aus zur Seite abragend oder ähnliches.

Die Oberseite des Getriebekastens **4** sollte freibleiben, da diese Roboter **50** in der Regel mit der Oberseite ihres Getriebekastens **4** an der Unterseite eines sogenannten Roboterhimmels **55** befestigt werden, wie in Figur **2** und **5**a dargestellt.

Dabei treibt die zentrale Abtriebswelle **4**a beispielsweise den Oberarm **5** an, dessen hinteres Ende radial abragend drehfest mit dieser Abtriebswelle **4**a verbunden ist. Die beiden Abtriebshülsen **4**b, c treiben beispielsweise je einen drehfest damit verbundenen Antriebshebel **16**a, b an, der um die Zahnradachse **26,** die ja gleichzeitig die erste Schwenkachse 1 ist, radial nach außen abstreben und mit dem hinteren Ende je eines der Anlenkstreben **14**a, b in Verbindung stehen, welche mit ihrem anderen Ende mit einem Anlenkhebel **15**a, b in Verbindung stehen, von denen jeder mit einem der Lagerzapfen **2**a, b drehfest verbunden ist und von diesem radial absteht.

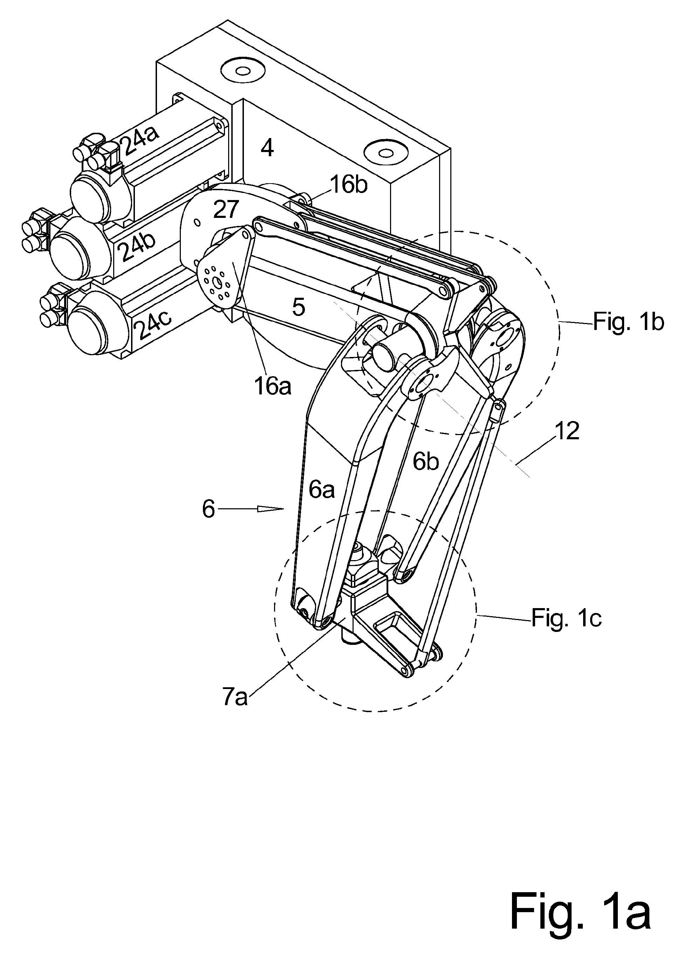

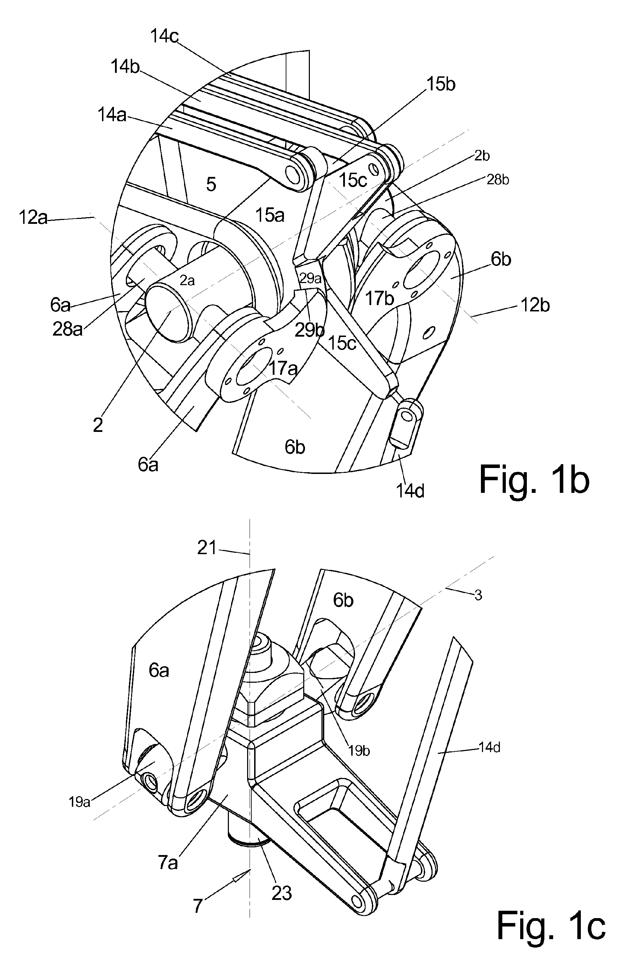

Der in Figuren **1**a, und **2** in der Mitte zwischen den Antriebshebeln **16**a, b sichtbare Anlenker **27** ist ortsfest gegenüber dem Getriebekasten **4** montiert und dient als Befestigungspunkt für eine weitere Anlenkstrebe **14**c, über die die Werkzeughand **7** immer in der gleichen Drehlage um die X-Achse, die dritte Haupt-Schwenkachse **3,** gehalten wird, unabhängig von der Stellung des Roboterarmes, sodass die im Werkzeuggrundkörper **7**a um eine aufrechte Achse **21** drehbare Werkzeugaufnahme **23** immer aufrecht steht, also die aufrechte Achse **21** mit der vertikalen Richtung Z übereinstimmt.

Zu diesem Zweck ist um die zweite Haupt-Schwenkachse **2** drehbar ein Anlenkhebel **15**c gelagert mit zwei von der Haupt-Schwenkachse **2** radial entfernten und auch in Umfangsrichtung beabstandeten Befestigungspunkten, von denen der eine mit der Anlenkstrebe **14**c gelenkig verbunden ist und der andere mit einer weiteren Anlenkstrebe **14**d, deren anderes Ende gelenkig an dem Grundkörper **7**a der Werkzeughand 7 außermittig befestigt ist.

Die Bewegungsachsen zwischen den Anlenkstreben und den Anlenkhebeln oder Antriebshebeln liegen jeweils parallel zu den drei Haupt-Schwenkachsen **1, 2, 3** und damit zur X-Richtung, jedenfalls solange sich der Roboterarm **10** in der Roboterebene **11** befindet und daraus nicht seitlich ausgelenkt ist.

Wie die seitliche Auslenkung des Unterarmes **6** aus dieser Roboterebene **11** realisiert wird, ist bei den beiden Ausführungsformen unterschiedlich:
Die anhand von Figur **2** erläuterten Bauteile sind auch in der perspektivischen Darstellung der Figur **1** erkennbar.

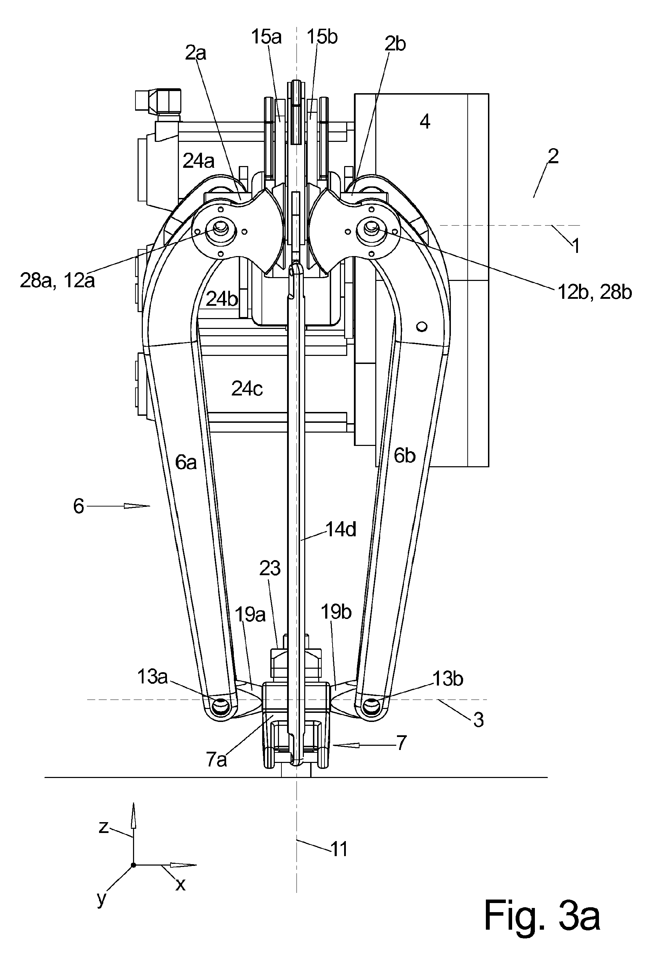

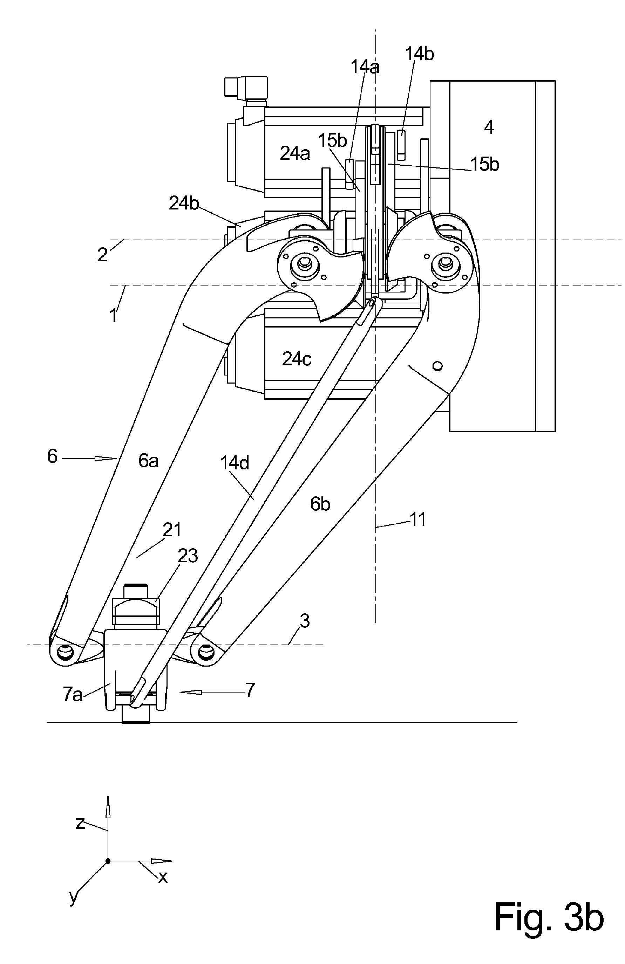

Aus Figur **1**a wird klar, dass der Oberarm **5** sich immer in der Armebene **11** bewegt, der Unterarm **6,** der aus zwei Unterarmteilen **6**a, b besteht, dagegen aus dieser Armebene **11** heraus verschwenkt werden kann, wie am besten anhand der Figuren **3**a und **3**b ersichtlich, bei der sich der Unterarm **6** in Figur **3**a noch auf der Armebene **11** befindet, in Figur **3**b dagegen das untere Ende des Unterarmes **6** aus der Armebene **11** herausgeschwenkt ist.

Aus dem Vergleich der Figuren **3**a und **3**b wird klar, dass die beiden Unterarmteile **6**a, b zusammen mit den Lagerungen an ihrem Ende ein Parallelogramm bilden:
In der unverschwenkten Stellung der Figur **3**a befinden sich die beiden Unterarmteile **6**a, b auf einander gegenüberliegenden Seiten bezüglich der Armebene **11,** wobei in diesem Fall die beiden Unterarmteile **6**a, b jeweils leicht bogenförmig ausgebildet sind mit der konkaven Seite einander zugewandt, bei Betrachtung in Blickrichtung der Figur **3****,** also in Richtung Y.

Das obere, am Unterarm **5,** befestigte Ende jedes der beiden Unterarmteile **6**a, b ist um jeweils eine Querschwenkachse **12**a, b - wie besser in Figur **2** zu erkennen -, die lotrecht zur zweiten Haupt-Schwenkachse **2** verlaufen, gegenüber je einem der beiden Schwenkzapfen **2**a, b verschwenkbar befestigt, die verschwenkbar um die zweite Haupt-Schwenkachse **2** im Oberarm **5** gelagert sind.

Die unteren, vom Oberarm **5** abgewandten, Enden der beiden Unterarmteile **6**a, b sind über je eine Quer-Ausgleichsachse **13**a, b schwenkbar gegenüber je einem der in X-Richtung verlaufenden Querschwenkzapfen **19**a, b verbunden, zwischen denen der Grundkörper **7**a der Werkzeughand **7** angeordnet ist.

Da die Quer-Schwenkachsen **12**a, b und die Quer-Ausgleichsachsen **13**a, b alle parallel zueinander verlaufen, und auch parallel zu der Armebene oder Roboterebene **11,** bilden die beiden Unterarmteile **6**a, b das oben angesprochene Parallelogramm mit der Folge, dass auch beim Verschwenken der Unterarmteile **6**a, b, also des Parallelogramms, der Grundkörper **7**a und damit die Werkzeughand **7,** immer in der gleichen Lage dergestalt bleibt, dass die bei nicht ausgelenktem Unterarm **6** sich vertikal durch den Grundkörper **7**a erstreckende Werkzeugaufnahme **23** mit ihrer aufrechten Achse **21,** um die sie hier gegenüber dem Werkzeuggrundkörper **7**a drehbar ist, immer parallel zur Roboterebene **11** gehalten wird.

Zu diesem Zweck ist im Grundkörper **7**a ein nicht dargestellter angesteuerter Motor untergebracht, der die Werkzeugaufnahme **23** gesteuert um die aufrechte Achse **21** dreht.

Durch die Anlenkstreben **14**c, **14**d und die Anlenkung an einem ortsfesten Punkt am hinteren Ende der Anlenkstrebe **14**c wird die aufrechte Achse **21** der Werkzeugaufnahme **23** auch immer in derselben Winkellage gehalten, unabhängig von der Stellung des Roboterarms.

Figur **1**c zeigt die Befestigung der Werkzeughand **7** zwischen den beiden unteren Enden der Unterarmteile **6**a, b in perspektivischer Ansicht vergrößert.

Wie das Verschwenken des Unterarms **6** sowohl um die zweite Haupt-Schwenkachse **2** als auch um die Achsen des Parallelogramms zum Zwecke des Ausschwenkens aus der Roboterebene **11** ermöglicht wird, ist am besten anhand der Detaildarstellung der Figur **1**b des Verbindungsbereichs zwischen Unterarm **6** und Oberarm **5** ersichtlich:

Die Querschwenkachsen **12**a, b sind realisiert durch Quer-Schwenkzapfen **28**a, b, die sich durch jeweils einen der Lagerzapfen **2**a, b hindurch erstrecken und an ihren vorstehenden Enden jeweils in einer Zinke des gabelförmigen oberen Endes eines der Unterarmteile **6**a, b ebenfalls drehbar gelagert ist.

Wenn nun die beidseits aus dem Oberarm **5** in X-Richtung vorstehenden Lagerzapfen **2**a, b synchron um ihre Achse gedreht werden, bewirkt dies ein Verschwenken des gesamten Unterarms **6** um die zweite Haupt-Schwenkachse **2.**

Wenn dagegen die beiden Unterarmteile **6**a, b unsynchron, insbesondere gegenläufig, um ihre jeweilige Quer-Schwenkachse **12**a, b verschwenkt werden, wird das Parallelogramm des Unterarms **6** verschwenkt und der Unterarm **6,** wie in Figur **3**b ersichtlich, aus der Roboterebene **11** relativ zur Roboterebene **11** mit seinem unteren freien Ende verschwenkt.

Wie diese beiden Bewegungen erzeugt werden können, ist in Figur **1**b ersichtlich:
Von jedem der Lagerzapfen **2**a steht radial ein drehfest damit verbundener Anlenkhebel **15**a, b ab, der mit einem der vom Getriebekasten aus angetriebenen unabhängig antreibbaren Anlenkstreben **14**a, b in Wirkverbindung steht und um die zweite Schwenkachse **2** verschwenkt werden kann.

Von jeweils einem der Zinken des gabelförmigen oberen Endes eines der Unterarmteile **6**a, b steht ebenfalls jeweils ein Quer-Schwenkhebel **17**a, b radial von der Querschwenkachse **12**a bzw. **12**b ab, und ragt in Richtung des entsprechenden Anlenkhebels **15**a, b, also in Richtung der Roboterebene **11.** Da die Schwenkachsen **2** und **12**a, **12**b im rechten Winkel zueinander stehen, erstrecken sich auch die Anlenkhebel **15**a, b einerseits und Querschwenkhebel **17**a, b andererseits in unterschiedliche Richtungen.

Auf jeder Seite der Roboterebene **11** steht jedoch der jeweilige Anlenkhebel, zum Beispiel **15**a, mit dem jeweiligen Querschwenkhebel **17**b über eine Kegel-Zahnradpaarung in drehfester Verbindung, von denen das eine Kegelzahnrad **29**a auf dem Außenumfang des Anlenkhebels **15**a konzentrisch um die zweite Haupt-Schwenkachse **2** angebracht ist und das Kegelzahnrad **29**b auf dem Außenumfang des Querschwenkhebels **17**a konzentrisch um die Querschwenkachse **12**a angeordnet ist.

Dies führt dazu, dass - betrachtet allein für die Paarung **15**a/**17**a - durch Bewegen der Anlenkstrebe **14**a und Verschwenken des Anlenkhebels **15**a um die Haupt-Schwenkachse **2** auch der Quer-Schwenkhebel **17**a um die Querschwenkachse **12**a verschwenkt wird und damit das Unteranteil **6**a - mit dem ja der Querschwenkhebel **17**a drehfest verbunden ist - um die Querschwenkachse **12**a verschwenkt wird und damit ausgehend von zum Beispiel der unverschwenkten Lage der Figur **3**a zur Seite verschwenkt wird gemäß Figur **3**b.

Dies ist jedoch in der Praxis nicht alleine möglich, denn die beiden Armteile **6**a, b sind ja an ihrem unteren Ende über die Werkzeughand **7** miteinander zwangsgekoppelt.

Die Paarungen **15**a/**17**a sowie **15**b/**17**b sind miteinander, also von Paarung zu Paarung, ausschließlich wirkverbunden über die Verbindung der unteren Enden der beiden Unterarmteile **6**a, b durch die Werkzeughand **7.**

Dies führt dazu, dass
- bei gleichlaufend synchronem Verschwenken der beiden Anlenkhebel **15**a, b um die zweite Haupt-Schwenkachse **2** und damit synchrones Verschwenken der beiden Lagerzapfen **2**a, b keine Relativbewegung in den Kegelzahnradpaaren, also zwischen den Kegelzahnrädern **29**a, b bei beiden Unteranteilen **6**a, b eintritt und somit der gesamte Unterarm **6** um die zweite Haupt-Schwenkachse **2** verschwenkt wird,
- dagegen bei gegenläufig synchronem Verschwenken der beiden Anlenkhebel **15**a, b eine entsprechende gegenläufiger Bewegung der beiden Querschwenkhebel **17**a, b bewirkt wird, und somit die beiden Unterarmteile 6a, b mit ihrem unteren Ende um den gleichen Betrag und in die gleiche Richtung seitlich, also relativ zur Roboterebene **11,** ausgelenkt werden.

Wegen der Zwangskopplung der unteren Enden der Unteranteile **6**a, b um die Roboterhand **7** muss das Verschwenken um die oberen Querschwenkachsen **12**a, b um den gleichen Winkelbetrag erfolgen, weshalb sich für diesen Fall die beiden Anlenkhebel **15**a, b gegenläufig mit gleicher Winkelgeschwindigkeit bewegen müssen.

Dennoch ist eine Überlagerung der beiden Bewegungen, also Verschwenken sowohl um die zweite Haupt-Schwenkachse **2** als auch die beiden Querschwenkachsen **12**a, b möglich:
Wenn die beiden Anlenkhebel **15**a, b unsynchron, also mit einer Differenzgeschwindigkeit zueinander, bewegt werden, so ergibt dies Folgendes:
   Die in X-Richtung, also in Blickrichtung der Figur **2****,** sich ergebende Winkelteilende zwischen den beiden Anlenkhebeln **15**a, b bewirkt mit ihrer Verschwenkung eine entsprechende Verschwenkung um die zweite Haupt-Schwenkachse **2,** während die Änderung der Winkeldifferenz zwischen den beiden Querschwenkhebeln **15**a, b eine entsprechende Verschwenkung um den entsprechenden Winkel um die Querschwenkachse **12**a, b ergibt.

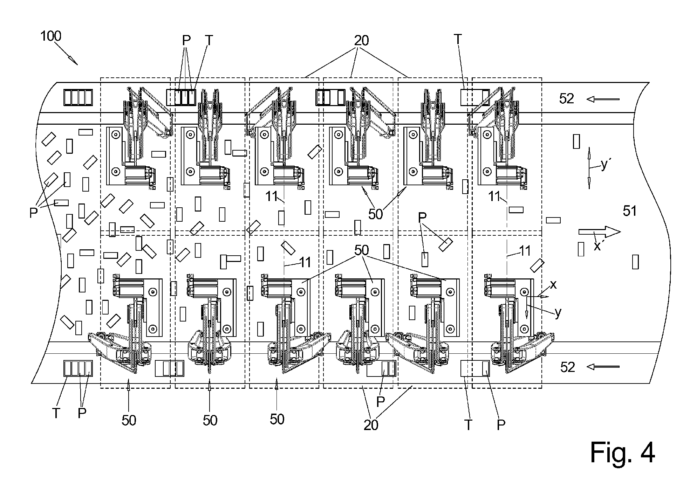

**Figur 4** zeigt in der Aufsicht von oben eine Roboterstraße **100** mit einem in Durchlaufrichtung X' laufenden Produktband **51,** welches sich in diesem Fall von links nach rechts bewegt, und auf dem unregelmäßig hinsichtlich Position und Drehlage abgelegt Produkte P herangeliefert werden, die in der Aufsicht betrachtet eine unrunde, in diesem Fall länglich-rechteckige, Form besitzen.

Diese Produkte P sollen von den Robotern **50** einzeln ergriffen und in Trays T in definierter Position abgelegt werden, wobei in diesem Fall in jedem Tray T vier der Produkte P parallel zueinander liegend Platz finden. Die Trays T werden zur Verfügung gestellt, indem sie auf jeweils einem Trayband **52** herantransportiert werden, wobei je ein Trayband **52** links und rechts des Produktbandes **51** angeordnet ist und parallel zum Produktband **51,** jedoch in Gegenrichtung hierzu verläuft.

Die Roboter **50** sind in zwei zueinander parallelen Reihen, in diesem Fall symmetrisch zur Längsmitte des Produktbandes **51,** angeordnet, sodass der Arbeitsbereich **20** jedes Roboters **50** sowohl einen entsprechenden Abschnitt in Durchlaufrichtung X' des auf seiner Seite liegenden Traybandes **52** als auch des Produktbandes **51,** allerdings nur bis zu dessen Längsmitte hin reichend, abdeckt.

Die Roboter **50** sind in diesem Fall so angeordnet, dass ihre Arbeitsbereiche **20** sowohl in X'-Richtung als auch in Y'-Richtung eng aneinander grenzen, evtl. einander berühren, aber noch nicht überlappen, was jedoch ebenfalls möglich wäre, wenn die Steuerung der Roboterstraße **100** in der Lage ist, dennoch Kollisionen benachbarter Roboterarme **10** zu vermeiden.

Die Roboter **50** sind - wie ganz rechts unten an einem Roboter **50** eingezeichnet - mit ihrer ersten Haupt-Schwenkachse **1,** der Längsrichtung X, parallel zur Durchlaufrichtung X' der Roboterstraße **100** angeordnet, und auch die erste horizontale Querrichtung Y des einzelnen Roboters stimmt mit der horizontalen Querrichtung Y' der Roboterstraße **100** überein.

Die Roboter 50 könnten jedoch auch mit ihrer Längsrichtung X leicht schräg stehend zur Durchlaufrichtung X' der Roboterstraße **100** angeordnet sein, wenn dies für den spezifischen Anwendungsfall Vorteile hätte.

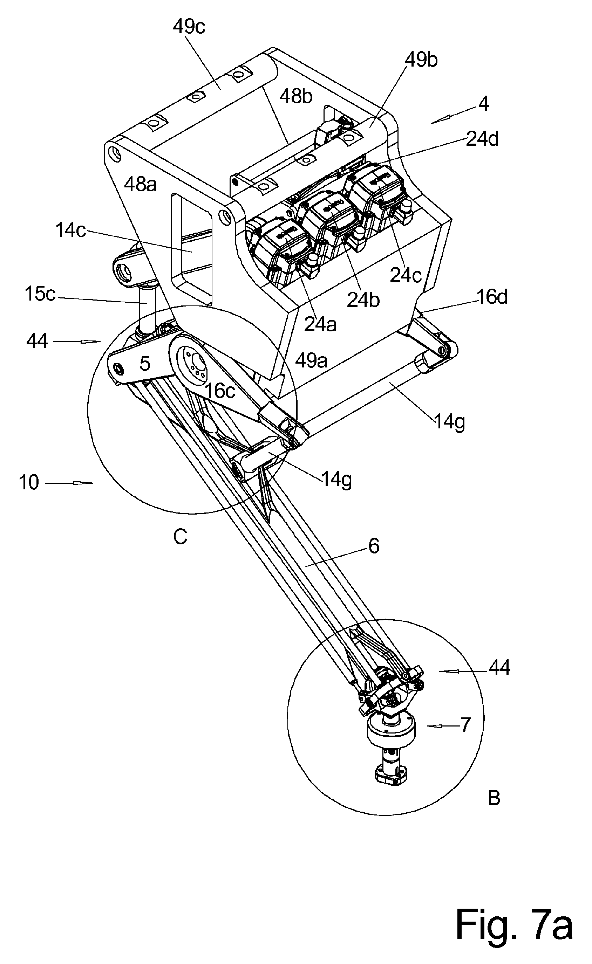

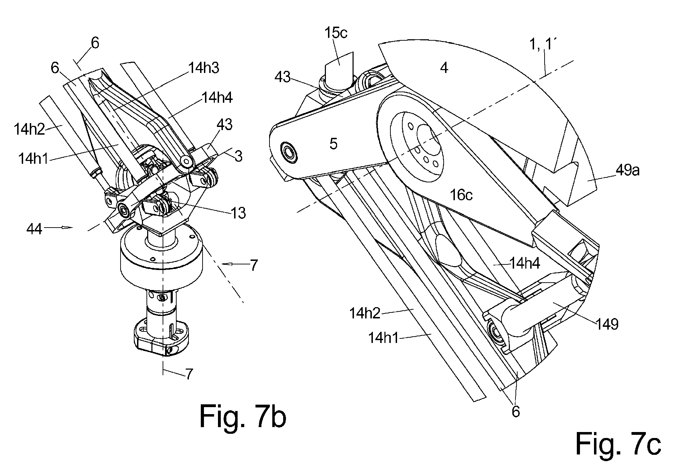

Figur 7 zeigt jedoch, dass wegen der geringen Abmessungen jedes Roboters **50** in seiner X-Richtung die Roboter **50** in den beiden Reihen in X'-Richtung der Roboterstraße **100** in einem sehr geringen Abstand zueinander montiert sein können, zumal bei dieser Anordnung der Roboter relativ zur Roboterstraße **100** die Arbeitsbereiche **20** der einzelnen Roboter **50,** die ja in der Regel rechteckig sind, in X'-Richtung relativ schmal sind, in Y'-Richtung dagegen eine wesentlich größere Erstreckung besitzen.

Dadurch können in einem Längsabschnitt der Roboterstraße **100** - gemessen in X'-Richtung - deutlich mehr Roboter **50** untergebracht werden als von den bisher bekannten Bauformen und Anordnungen solcher vier- oder fünfachsiger Roboter für Umsetzaufgaben in einer Roboterstraße, wodurch zum einen der Platzbedarf für die Roboterstraße in Durchlaufrichtung verringert wird und durch die geringere Länge auch teure Komponenten wie Fördermittel und ähnliche Teile der Roboterstraße **100,** die in diese Richtung verlaufen, reduziert werden.

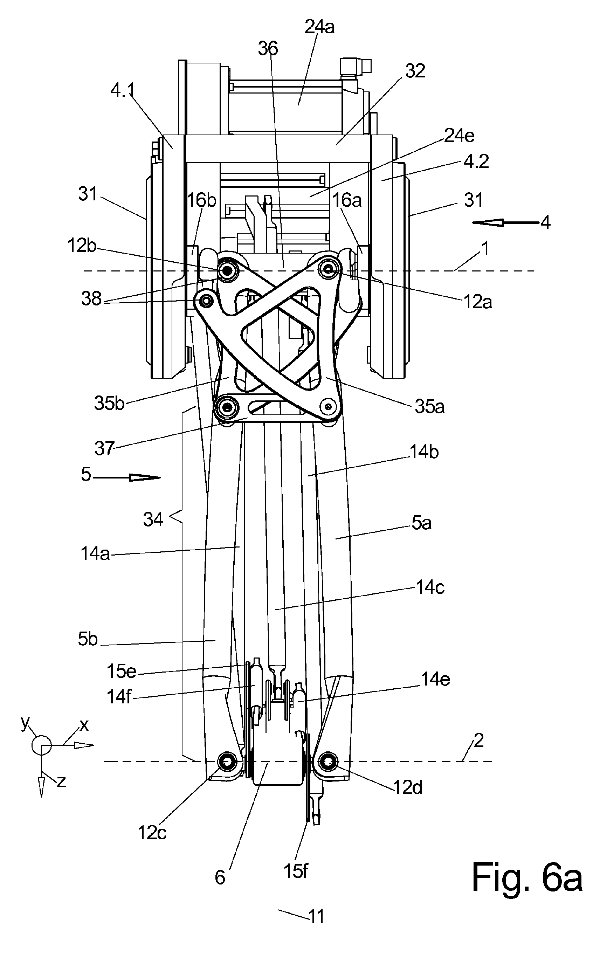

Eine zweie Ausführungsform ist in den **Figuren 5a****-c, 6a-c** dargestellt. Diese dritte Ausführungsform unterscheidet sich gegenüber den ersten beiden Ausführungsformen dadurch, dass nicht der Unterarm 6 seitlich aus der Roboterebene 11 auslenkbar ist, sondern der Oberarm 5.

Wird der Roboter eingesetzt, um Produkte von einer etwa horizontalen Fläche aufzunehmen, so ragt bei dieser Ausführungsform vorzugsweise der Oberarm von der Roboterbasis aus, hier wiederum gebildet durch einen Getriebekasten 4, nach unten, während vom unteren freien Ende des Oberarmes 5 aus der Unterarm 6 mehr oder weniger horizontal abragt.

Im Gegensatz dazu hat ja bei den beiden ersten Ausführungsformen der Oberarm 5 im Wesentlichen waagerecht von seiner Lagerung am Getriebekasten 4 abgeragt, und der Unterarm 6 im Wesentlichen mit seinem freien Ende nach unten gerichtet.

Bei dieser dritten Ausführungsform besteht der Oberarm aus zwei parallelogrammartig miteinander verbundenen und parallel zueinander verschwenkbaren Oberarm-Teilen 5a, b, wobei jedoch die parallelogrammartige Verbindung und der Antrieb für dieses seitliche Ausschwenken des Oberarmes 5 anders gestaltet ist als die ebenfalls parallelogrammartig miteinander verbundenen Unterarmteile bei der ersten Ausführungsform.

Der motorische Antrieb für die Drehung der Werkzeug-Aufnahme 23 im Grundkörper 7a der Werkzeughand 7 wird durch einen Motor 24d, der ebenfalls im Getriebekasten 4 angeordnet sind, bewirkt und von dort aus wiederum über ein Hebelgestänge, also Schwenkhebel einerseits und Anlenkstreben andererseits, nach unten zur Werkzeug-Aufnahme 23 übertragen wird.

Dementsprechend sind bei der Ausführungsform vier Motore 24a-d am Getriebekasten 4 vorhanden, drei Motore 24a, b, c auf der Oberseite über die Getriebewangen 4.1, 4.2 hinweggehend und ein kleinerer Motore 24d im Zwischenraum zwischen den beiden Getriebewangen 4.1, 4.2.

Ein weiterer Unterschied, der vorliegenden Ausführungsform gegenüber der ersten und zweiten Ausführungsform, besteht darin, dass der Getriebekasten 4 nicht eine einzige durchgehende Antriebswelle und darauf konzentrisch geführte Antriebshülsen umfasst, sondern der Getriebekasten 4 aus zwei parallel zueinander in der Roboterebene, also Armebene 11, verlaufenden Getriebewangen 4.1, 4.2 besteht, die über Querstreben 32 miteinander verbunden sind und auf Abstand gehalten werden, und in den Hohlräumen der Getriebewangen 4.1, 4.2, die großflächig nach außen offen sind und durch von außen aufgesetzten Getriebedeckeln 31 verschlossen sind, jeweils Teile des Getriebes untergebracht sind:
Die **Figuren 5a****-e** zeigen den Roboter in dieser Ausführungsform in zwei unterschiedlichen perspektivischen Ansichten sowie in Seitenansicht und Aufsicht.

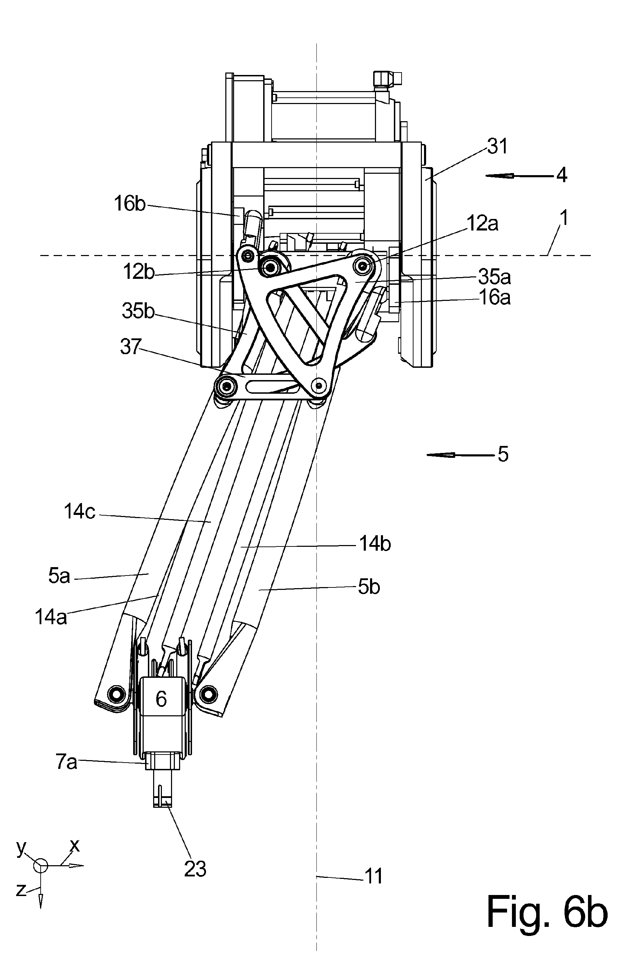

Die **Figuren 6a****, b** zeigen in einer übereinstimmenden Blickrichtung quer zur X-Achse, der ersten Hauptschwenkachse 1, in **Figur 6a** den Oberarm 5 mit seinen beiden Armteilen 8a, b in neutraler Lage, also symmetrisch zur Roboterebene 11, die die Längsmittelebene des Roboters darstellt, während **Figur 6b** den Oberarm 5 in der nach links ausgelenkten Lage zeigt.

Die beiden parallel zueinander liegenden Oberarmteile 5a, b, die in X-Richtung zueinander versetzt und beabstandet sind, sind mit ihrem oberen Ende jeweils schwenkbar um eine Querschwenkachse 12a bzw. 12b, die parallel zueinander und in X-Richtung beabstandet quer zu dieser X-Richtung verlaufen, in einem Schulterkörper 36 gelagert, der seinerseits schwenkbar um die X-Achse, die Hauptschwenkachse 1, mit seinen Enden gegenüber den Getriebewangen 4.1, 4.2. befestigt ist.

Die beiden Oberarmteile 5a, 5b sind zu einem Parallelogramm miteinander verbunden, indem zwischen den vom Getriebekasten 4 wegweisenden freien Enden der Oberarmteile 5a, b der Grundkörper 7a einer Werkzeughand 7 gelenkig zwischen diesen Enden befestigt ist und näher am Getriebekasten eine weitere Parallelogramm-Strebe 37 ebenfalls gelenkig mit ihrem je einen Ende an je einem der Oberarmteile 5a, b befestigt ist, sodass sich bei Auslenken eines der Armteile wie für ein Parallelogramm typisch das andere Armteil mit verschwenkt unter Beibehaltung der parallelen Lage zum ersten Armteil.

Natürlich kann der Oberarm 5 auch um die Hauptschwenkachse 1 in der Roboterebene 11 gegenüber dem Getriebekasten 4 verschwenken.

Sowohl das Auslenken des Parallelogramms, also des Oberarmes 5 aus der Armebene 11 als auch das Verschwenken des Oberarmes 5 um die erste Hauptschwenkachse 1 gegenüber dem Getriebekasten 4, erfolgt ähnlich wie bei den ersten beiden Ausführungsformen über Antriebshebel 16a, b, die radial von der Hauptschwenkachse 1 abstreben und schwenkbar auf dieser gelagert sind:
Auf der dem Unterarm 6 gegenüberliegenden Rückseite des Oberarmes 5 sind die Oberarmteile 5a, b zu diesem Zweck über zwei parallel zur ersten Hauptschwenkachse 1 liegende Schwenkplatten 35a, b miteinander verbunden, die etwa dreieckig ausgebildet sind, und jeweils eine Durchgangsbohrung in jedem Eckbereich als Lagerachse besitzen.

Jede der Schwenkplatten 35a, b ist mit zwei ihrer drei als Lagerstelle dienenden Bohrungen 38 einerseits an der Querschwenkachse 12a bzw. 12b und andererseits an einem Punkt davon entfernt an dem jeweiligen Oberarmteil 5a bzw. 5b gelenkig befestigt. Die dritte Bohrung jeder Querschwenkplatte ist auf der bezüglich der Längsmittelebene, die in Richtung der Roboterebene 11 liegt, gegenüberliegenden Seite und außerhalb des anderen Oberarmteiles 5b bzw. 5a mit einem um die erste Hauptschwenkachse 1 schwenkbaren Antriebshebel 16a, b gelenkig verbunden. Die Bohrungen 38, die als Gelenkachsen dienen, verlaufen alle parallel zu diesen Querschwenkachsen 12a, b.

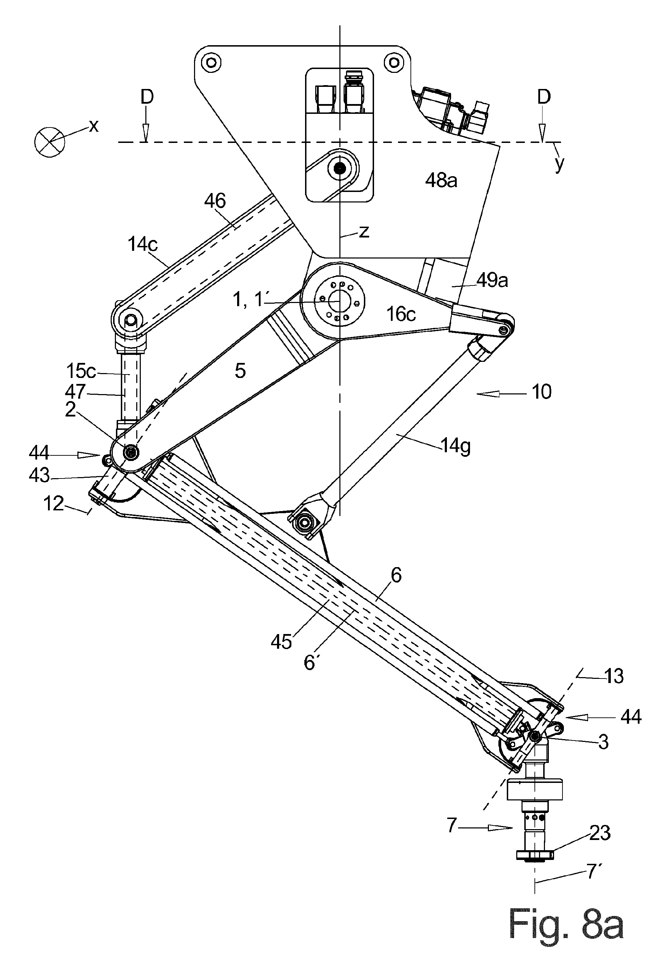

Werden beide Antriebshebel 16a, b um den gleichen Winkelbetrag, synchron um die erste Hauptschwenkachse 1 verschwenkt, - zum Beispiel betrachtet in Richtung der Figur 8a - so verschwenkt der gesamte Oberarm 5 mit beiden Oberarmteilen 5a, b in der gleichen Winkelstellung gemeinsam um die erste Hauptschwenkachse 1.

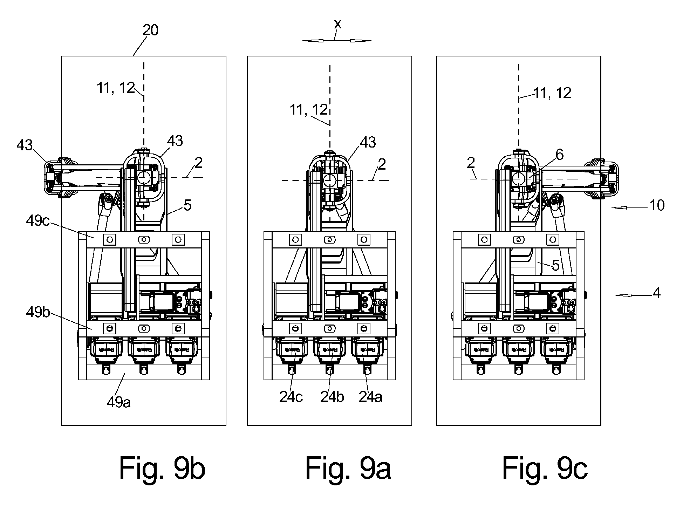

Werden dagegen die beiden Antriebshebel 16a, b ungleichmäßig verschwenkt, zum Beispiel in Figur 9b die linke Ecke der Schwenkplatte 35a, die mit den beiden anderen Bohrungen am rechten Oberarmteil 5b befestigt ist, nach oben geschwenkt mit Hilfe des dortigen Antriebshebels 16b, so wird dadurch der Oberarmteil 5b von der unteren Bohrung dieser Schwenkplatte 35a nach links gezogen und verschwenkt, und wegen der parallelogrammartigen Verbindung der beiden Oberarmteile 5a, b auch der andere Oberarmteil 5a.

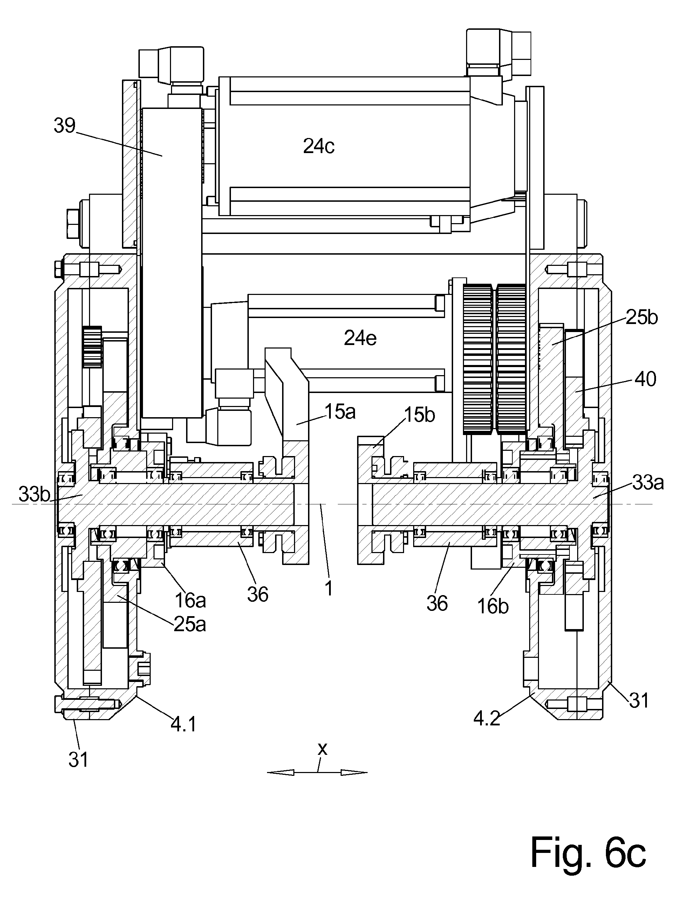

Wie der Schnitt parallel zur ersten Hauptschwenkebene 1 durch das Getriebe gemäß **Figur 6c** zeigt, ragt von jeder der Getriebewangen 4.1, 4.2 ein Wellenstumpf 33a, b fluchtend zueinander auf die jeweilige andere Getriebewange 4.1, 4.2 zu, wobei jedoch zwischen den beiden gegeneinander gerichteten Enden der beiden in X-Richtung verlaufenden Wellenstumpfe 33a, b ein Abstand verbleibt. Jeder Wellenstumpf 33a, b ist mit seinem äußeren Ende schwenkbar um seine Längsachse in der jeweiligen Getriebewange 4.1, 4.2 gelagert. Auf der Innenseite jeder der Getriebewangen 4.1, 4.2 ist je einer der Antriebshebel 16a, b ebenfalls drehbar auf je einem Wellenstumpf 33a, b gelagert, an dessen außermittigem radialen Ende die jeweils dritte, nicht mit dem einen der Oberarmteile 5a, b verbundenen, Bohrungen 38 der Schwenkplatte 35a, b gelenkig verbunden ist.

Jeder der Antriebshebel 16a, b ist mit je einem der auf der Oberseite des Getriebekastens 4 über den Getriebewangen 4.1, 4.2 in X-Richtung verlaufend angebrachten Motore 24a, b, die mit ihrem Abtriebszapfen in entgegengesetzte Richtungen weisen, mittels eines Zahnriemen-Antriebes verbunden, wovon der eine Zahnriemen 39 in der linken Bildhälfte dargestellt ist, und in der rechten Bildhälfte der Zahnriemen nicht dargestellt ist, dafür aber das untere, mit dem Antriebshebel 16b wirkverbundene, ZahnriemenRad erkennbar ist,.

Die Verbindung ist realisiert über je ein im Inneren der Getriebewange 4.1 bzw. 2 liegendes Stirnrad-Segment 25a, b, welches drehfest mit dem jeweiligen Antriebshebel 16a, b gekoppelt ist und von dem jeweiligen Motor 24a, b aus mittels des jeweiligen Zahnriemen Antriebes in Drehung ebenfalls um den Wellenstumpf 33a, b, also die erste Hauptschwenkachse 1, versetzt werden kann.

Der dritte Motor 24c verschwenkt den Unterarm 6, der mit seinem hinteren Ende gelenkig um die zweite Hauptschwenkachse 2 am freien Ende des Oberarmes 5 befestigt ist, relativ zu dem Unterarm 5. Zu diesem Zweck greift eine Anlenkstrebe 14c am Unterarm 6 beabstandet von der zweiten Hauptschwenkachse 2 mit ihrem einen Ende gelenkig an und mit dem anderen Ende außermittig an einem Antriebshebel 15a, der auf dem in Figur 9C linken Wellenstumpf 33b an dessen freien Ende befestigt ist und von dem dritten der drei auf der Oberseite angeordneten Motore 24c verschwenkt wird, vorzugsweise indem dieser Antriebshebel 15a vorzugsweise drehfest mit dem Wellenstumpf verbunden ist und dieser ebenfalls mit verschwenkt wird.

Der weitere vierte, zwischen den Getriebewangen 4.1, 4.2 vorhandenen kleinere Motor 24d, dient zum Verdrehen der Werkzeugaufnahme 23 in dem Werkzeug-Grundkörper 7a der Roboter Hand 7:
Zu diesem Zweck steht der Motor 24d in Wirkverbindung mit einem Zahnrad-Segment 40, dass am nach außen weisenden, freien Ende des in Figur 9c rechten Wellenstumpfes 33a angeordnet ist, und drehfest mit dem ebenfalls auf dem rechten Wellenstumpf 33a, allerdings deren linken, freien Ende, befestigten Antriebshebel 15b verbunden ist, was gemäß Figur 9c dadurch gelöst ist, dass sowohl das Zahnrad-Segment 40 als auch der Antriebshebel 15b drehfest mit dem Wellenstumpf 33a verbunden sind.

An dem Antriebshebel 15b greift außermittig die Anlenk-strebe 14 b an, die - siehe beispielsweise Figur 8a - außermittig der zweiten Hauptschwenkachse 2 am Unterarm 6 angreift und diesen relativ zum Oberarm 5 verschwenkt. Die Schwenklage des Grundkörpers 7a der Werkzeughand 7 um die dritte Hauptschwenkachse 3 gegenüber dem Unterarm 6 wird nicht über einen Motor angetrieben, sondern über einen Parallelogrammantrieb unabhängig von der Lage von Oberarm 5 und Unterarm 6 immer in den gleichem Schwenkwinkel um diese dritte Hauptschwenkachse 3 gehalten.

Wie die **Figuren 5a** **- d** zeigen, besteht dieser Parallelogrammantrieb aus einem Hebelgestänge in Form des Anlenkhebels 15f, der drehfest mit dem Grundkörper 7a verbunden ist, an dem außermittig eine Anlenkstrebe 14e angreift, und an diese mit ihrem anderen Ende wiederum außermittig an einem weiteren Anlenkhebel 15d befestigt ist, die schwenkbar um die zweite Hauptschwenkachse 2 gelagert ist. An diesem Anlenkhebel 15d ist wiederum außermittig eine weitere Anlenkstrebe 14b befestigt, die mit ihrem anderen Ende außermittig an einem um die erste Hauptschwenkachse 1 gelagerten Antriebshebel befestigt ist.

Je nach Wahl der Relation der Längen von Oberarm 5 und Unterarm 6 zueinander und abhängig von weiteren Bedingungen, beispielsweise räumlicher Einengungen des jeweiligen Anwendungsfalles, bieten die unterschiedlichen Ausführungsformen unterschiedliche Vor- und Nachteile, beispielsweise
- die erste Ausführungsform nur geringen Platzbedarf knapp über der Oberfläche, von der die Werkzeugaufnahme 23 zum Beispiel Produkte aufnehmen soll,
- die dritte Ausführungsform dagegen beispielsweise mehr Freiraum seitlich neben dem Getriebekasten 4 beidseits der ersten Hauptschwenkachse 1, und
- auch unterschiedliche maximale Größen des Arbeitsbereiches des Roboters, gemessen in einer zum Beispiel horizontalen Ebene.

Die **Figuren 7a bis 9d** zeigen eine dritte Ausführungsform des Roboters:
Auch hier besteht der Unterarm **6,** an dessen vom Oberarm **5** abgewandten Ende die Werkzeughand **7** befestigt ist, nicht aus mehreren miteinander gekoppelten sondern aus einer einzigen Hauptstrebe **6,** parallel zu welcher durchaus Anlenk-Streben **14h1 bis 14**h4 für die Ansteuerung zum Beispiel der Werkzeughand 7 verlaufen, die aber nicht wie die Hauptstrebe des Unterarmes die Kräfte zum Beispiel zum Anheben und Absenken der Werkzeughand Mit daran hängendem Produkt übertragen.

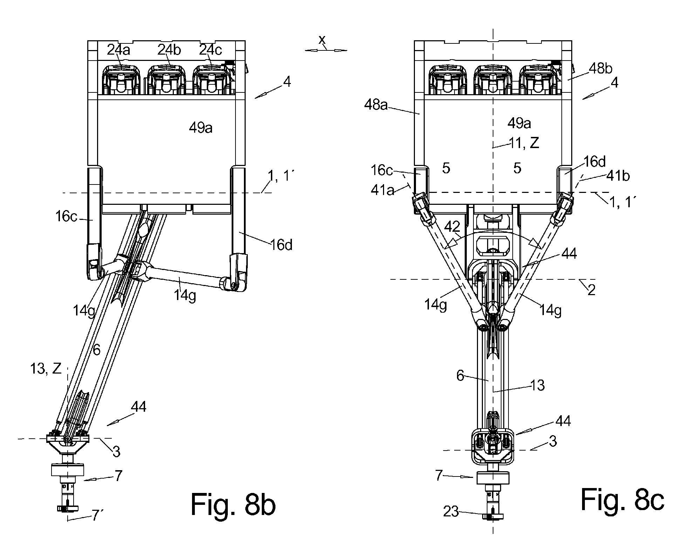

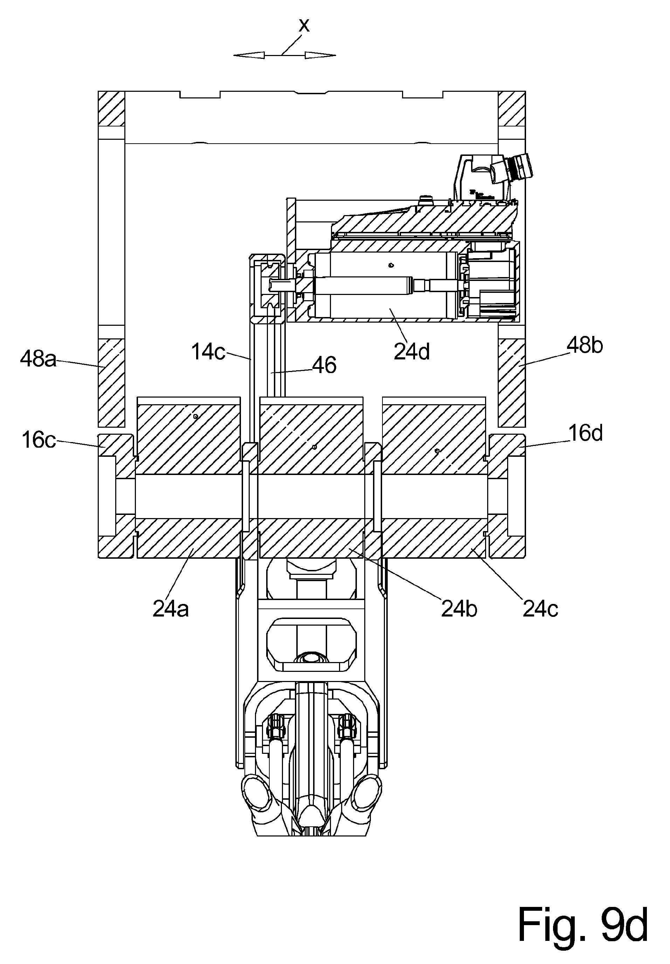

Wie bei der zweiten Ausführungsform ist auch hier der Unterarm **6** aus seiner Armebene **11** heraus verschwenkbar, wie die Seitenansicht die **Figuren 8b****, c** und in der Aufsicht die **Figuren 9 a bis c** zeigen.

Damit der Unterarm **6** aus der Armebene **11** heraus verschwenkbar ist, ist er auch bei dieser Ausführungsform um eine Quer-Schwenkachse **12** - siehe am besten **Figuren 9a****, b****, c** sowie **Figur 8c** - zusätzlich zur zweiten Haupt-Schwenkachse 2 gegenüber dem Oberarm **5** verschwenkbar.

Analog dazu ist die Werkzeughand **7** gegenüber dem anderen Ende des Unterarmes **6** nicht nur um die dritte Haupt-Schwenkachse **3,** sondern zusätzlich zu einer dazu im rechten Winkel stehenden Quer-Ausgleichsachse **13** verschwenkbar.

Um den Unterarm **6** um die Quer-Schwenkachse **12** zu verschwenken, sind an dem Getriebekasten **4** in der Längsrichtung, der X-Richtung, beabstandet an Anfang und Ende je ein Antriebshebel **16c, d** um eine erste Haupt-Antriebsachse **1**', die mit der Haupt-Schwenkachse **1,** um die der Oberarm **5** dreht, identisch ist, schwenkbar befestigt.

Die Schwenkbewegung wird von jeweils einem der beiden äußeren der drei in Richtung X hintereinander angeordneten Motor-Getriebe-Einheiten **24a** und **24c** direkt angetrieben, die während des Verschwenken des Oberarms **5** um dessen erste Haupt-Schwenkachse 1 von der in der Mitte angeordneten Motor-Getriebe-Einheit **24d** bewirkt wird.

Diese drei Motor-Getriebe-Einheiten sind in X-Richtung hintereinander im Getriebekasten **4** angeordnet, der im Wesentlichen aus zwei in X-Richtung beabstandeten Seitenplatten **48a, b** besteht, die durch Verbindungsstreben **49a, b, c,** von denen eine auch als Platte ausgebildete ist, auf Abstand zueinander gehalten werden. Die drei Motor-Getriebe-Einheiten **24a, b, c** sind zwischen den Seitenplatten **48a, b** in Längsrichtung X hintereinander angeordnet, so dass der Getriebekasten 4 eine relativ große Erstreckung in Längsrichtung X besitzt, die aber immer noch geringer ist als der Arbeitsbereich **20** des Roboters in X-Richtung, wie in der Aufsicht in den **Figuren 12a bis c** eingezeichnet.

Mit dem freien Ende jedes der beiden Antriebshebels **16c, d** ist je eine Anlenk-Strebe **14g** gelenkig befestigt, die jeweils mit ihrem anderen Ende ebenfalls gelenkig mit dem Unterarm **6** verbunden ist, etwa in der Mitte dessen Längserstreckung.

Betrachtet in Verlaufsrichtung 6' des Oberarmes 6 greifen die beiden Anlenk-Streben 14g - wie am besten in den **Figuren 8b** **und 11c** ersichtlich - mit unterschiedlichen Angriffsrichtungen 41 a, b an dem Unterarm 6 an, wobei der Zwischenwinkel 42 zwischen diesen Angriffsrichtungen 41 a, b in der Mittellage des Roboterarmes, also wenn sich der Unterarm 6 auf der Armebene 11 befindet, zwischen 40° und 70° beträgt.

Wie **Figur 8b** und auch die **Figuren 9a** **- c zeigen,** wird durch unterschiedliche Winkelstellungen, also Verdrehungen, der unabhängig voneinander verschwenkbaren Antriebshebel 16c, d der Unterarm 6 aus der Armebene 11 heraus verschwenkt, so dass mittels der Steuerung durch entsprechende Ansteuerung der Antriebshebel 16c, d jeder gewünschte Auslenkungswinkel des Unterarmes 6 aus der Armebene 11 heraus bewirkt werden kann.

Ein Verschwenken des Unterarmes 6 um die zweite Haupt-Schwenkachse 2 gegenüber dem Oberarm 5 wird erreicht, indem die beiden Antriebshebel 16c, d synchron miteinander verschwenkt werden.

Damit lassen sich in dem durch die Länge und Bewegungsmöglichkeiten des Roboterarmes 10 definierten dreidimensionalen Arbeitsbereich 20 in einem von den Abmessungen eines Roboterarmes abhängenden Höhenbereich in der Aufsicht betrachtet alle Punkte im Arbeitsbereich 20 anfahren, und damit auch von der am unteren, freien Ende des Unterarmes 6 befestigten Werkzeughand 7.

Dabei soll die Werkzeughand 7, die ja am freien Ende die drehbare Werkzugaufnahme 23 trägt und am anderen Ende mit dem Oberarm 6 verbunden ist, mit ihrer Verlaufsrichtung 7' - unabhängig von der Bewegung des Roboterarmes 10 - immer die gleiche Orientierung im Raum, insbesondere die vertikale Orientierung, beibehalten.

Dies wird in diesem Fall erreicht durch ein an beiden Enden des Unterarmes 6 angeordnetes Kardangelenk 44, welche identisch ausgebildet sind und über das am einen Ende der Oberarm 5, besser gesagt das den Oberarm 5 umfassende Oberarm-Parallelogramm, befestigt ist und am anderen Ende die Werkzeughand 7.

Die Bauform des Kardangelenks 44 wird anhand der daran befestigten Werkzeughand 7 erläutert, und ist am besten in der vergrößerten Darstellung der **Figur 7b** zu erkennen:
Das dem Kardan-Gelenk 44 zugewandte Ende des Unterarmes 6 ist gabelförmig ausgebildet, und im Inneren der Gabel ist ein rechteckig umlaufender Kardan-Rahmen 43 als Kardanmittelstück 43 um die Quer-Ausgleichsachse 13, die im rechten Winkel zur dritten Haupt-Schwenkachse 3 verläuft, verschwenkbar gelagert.

Die Werkzeughand 7 ist mit dem dem Kardangelenk 44 zugewandten Ende gegenüber den anderen Schenkeln des Kardan-Rahmens 43 um diese dritte Haupt-Schwenkachse 3 verschwenkbar gelagert.

Die Drehlage der Werkzeughand um die beiden Achsen 3, 13 wird dadurch bestimmt, dass an der Werkzeughand 7 beidseits der Quer-Ausgleichsachse 13 je ein Paar von Anlenk-Streben 14h1, 14h2 beziehungsweise 14h3, 14h4 mit seinen Enden außermittig der Quer-Ausgleichsachse 13 angreift, und bei jedem Paar die beiden Anlenk-Streben auf einander gegenüber liegenden Seiten bezüglich der dritten Haupt-Schwenkachse 3.

Je nachdem, wie diese Anlenk-Streben 14h1 - 14h4 relativ zueinander in ihrer Erstreckungsrichtung vor oder zurück bewegt werden, ergibt dies eine bestimmte Drehstellung der Werkzeughand 7 um die beiden Achsen 3, 13.

Der Oberarm 5, der verschwenkbar um die erste Haupt-Schwenkachse 1 gegenüber dem Getriebekasten befestigt ist, ist Teil eines Oberarm-Parallelogramms. Dabei ist eine Anlenk-Strebe 14c, die beabstandet zur ersten Haupt-Schwenkachse 1 um eine dazu parallele Schwenkachse ebenfalls verschwenkbar am Getriebekasten 4 befestigt ist, und immer parallel zum Oberarm 5 gehalten wird, indem deren beide freien Enden durch einen Anlenkhebel 15c gelenkig miteinander verbunden sind und dessen Gelenke den gleichen Abstand zueinander haben wie die Schwenkachsen, um die der Oberarm 5 und die Anlenk-Strebe 14c im Getriebekasten 4 gelagert sind.

Dieses Parallelogramm dient zur Beibehaltung der Orientierung der Werkzeughand 7 in seiner Erstreckungsrichtung 7' im Raum, in dem - wie am besten in **Figur 8a** zu erkennen ist - der Anlenkhebel 15c als Teil des Parallelogramms seine in diesem Fall vertikale Lage beibehält unabhängig von der Schwenkstellung des Oberarmes 5 und dies in gleicher Weise für die Erstreckungsrichtung 7' der Werkzeughand 7 dadurch erreicht wird, dass das am Oberarm-seitigen Ende des Unterarmes 6 angeordnete Kardangelenk 44 wie folgt angesteuert wird:
Der Anlenkhebel 15c ist schwenkbar um die zweite Haupt-Schwenkachse 2 gegenüber dem Kardan-Rahmen 43 des oberen Kardangelenks 44 gelagert analog zur Werkzeughand 7 im unteren Kardangelenk 44.

Auch das obere, also Oberarm-seitige, Ende des Unterarmes 6 ist gabelförmig ausgebildet, und in der Gabel ist der Kardan-Rahmen 43 verschwenkbar um die Quer-Schwenkachse 12 gelagert.

Die vier Anlenk-Streben 14h1 bis 14h4 greifen analog zu ihrem unteren, also Werkzeughand-seitigen Ende in je einem der Quadranten zwischen den sich kreuzenden Achsen 12, 2 und beabstandet zu diesen Achsen jeweils an dem Antriebshebel 15c an.

Der Antrieb der am unteren Ende der Werkzeughand 7 befindlichen, um die Erstreckungsrichtung 7' der Werkzeughand 7 drehbaren, Werkzeugaufnahme 23 wird über einen im Getriebekasten 4 angeordneten Werkzeug-Motor 24d bewirkt, der - wie am besten in **Figur 7a** sowie deren Schnittdarstellung 12d zu erkennen - in Längsrichtung X verlaufend zwischen den beiden Seitenplatten 48a, b angeordnet ist und an einem seiner Enden auf der aus diesem Werkzeug-Motor 24d vorstehenden Abtriebszapfen ein Ritzel drehfest aufgesteckt ist, welches sich im Inneren der hohlen Anlenk-Strebe 14c, die Teil des Oberarm-Parallelogramms ist, befindet. Dieses Ritzel treibt den im Inneren dieser Anlenk-Strebe 14c umlaufenden Zahnriemen 46 an, der in Wirkverbindung steht mit einer im Inneren des Antriebshebels 15c in dessen Verlaufsrichtung verlaufenden Zwischenwelle 47 und diese wiederum mit einer im Inneren des Unterarmes 6 in dessen Verlaufsrichtung angeordneten Antriebswelle 45, die wiederum wirkverbunden ist mit der Werkzeugaufnahme 23.

Auf diese Art und Weise wird das relativ hohe Gewicht eines separaten, in der Werkzeughand 7 angetriebenen, Motors und die Zuleitungen dorthin vermieden, wodurch zum Beispiel Kabelbrüche vermieden werden als auch das Gewicht der Werkzeughand 7 verringert wird, welches ja maßgeblich die maximale Beschleunigung der Werkzeughand bei vorgegebener Antriebsleistung für deren Bewegung bedingt.

### BEZUGSZEICHENLISTE

- **1**: 1. Haupt-Schwenkachse
- **1'**: 1. Haupt-Antriebsachse
- **2**: 2. Haupt-Schwenkachse
- **2**a, b: Lagerzapfen
- **3**: 3. Haupt-Schwenkachse, 2. Kardan-Achse
- **4**: Getriebekasten
- **4.1, 4.2**: Getriebewange
- **4**a: Abtriebswelle
- **4**b, c: Abtriebshülse
- **5**: Oberarm
- **5**a, b: Oberarmteil
- **6**: Unterarm
- **6'**: Verlaufsrichtung
- **6**a, b: Unterarmteil
- **7**: Werkzeughand
- **7**': Verlaufsrichtung
- **7**a: Grundkörper
- **8**: Lagerblock
- **9**: Teller-Kegelzahnrad
- **10**: Roboter-Arm
- **11**: Armebene, Roboterebene
- **12, 12**a, b: Quer-Schwenkachse
- **13**, **13**a,b: Quer-Ausgleichsachse, erste Kardan-Achse
- **14**a-f, g, 14h-4: Anlenk-Strebe
- 15a, b: Antriebshebel
- **15**c - f: Anlenkhebel
- **16**a - d: Antriebshebel
- **17**a, b: Quer-Schwenkhebel
- **18**: Quer-Schwenkzapfen
- **19**a, b: Quer-Schwenkzapfen
- **20**: Arbeitsbereich
- **21**: aufrechte Achse
- **22**a, b: Lagerbuchse
- **23**: Werkzeugaufnahme
- **24**a - c: Motor
- **24d**: Werkzeug-Motor
- **25**a - c: Ritzel
- **26**: Zahnradachse
- **27**: Anlenker
- **28**a, b: Quer-Schwenkzapfen
- **29**a, b: Kegelzahnrad
- **30**: Kreuzgelenk
- **31**: Getriebedeckel
- **32**: Querstreben
- **33a, b**: Wellenstumpf
- **34**: Parallelogramm
- **35**a, b: Schwenkplatte
- **36**: Schulterkörper
- **37**: Parallelogramm-Strebe
- **38**: Bohrung
- **39**: Zahnriemen
- **40**: Zahnradsegment
- **41a, b**: Angriffsrichtung
- **42**: Zwischenwinkel
- **43**: Kardan-Mittelstück, Kardan-Rahmen
- **44**: Kardan-Gelenk
- **45**: Antriebswelle
- **46**: Zahnriemen
- **47**: Zwischenwelle
- **48**a, b: Seitenplatte
- **49**a - **c**: Verbindungsstrebe
- **50**: Roboter
- **51**: Produktband
- **52**: Trayband
- **55**: Roboterhimmel

- **100**: Roboter-Straße

- P: Produkt
- T: Tray

### (Roboter-Richtungen:)

- X =: Richtung der ersten Schwenkachse, Längsrichtung
- Y =: erste, insbesondere horizontale, Querrichtung hierzu
- Z =: lotrecht auf beiden stehend, insbesondere die Vertikale

### (Roboterstraßen-Richtungen:)

- X' =: Durchlaufrichtung der Produkte
- Y'=: horizontale Querrichtung hierzu
- Z' =: Vertikale

## Patentansprüche

1. Roboter (**50**); mit
- einem Roboterarm **(10)** der einen Oberarm **(5),** einen Unterarm **(6)** und eine Werkzeughand **(7)** umfasst, wobei
- der Oberarm **(5)** an einer ortsfest montierten Basis verschwenkbar befestigt ist um eine erste Haupt-Schwenkachse **(1),** die lotrecht zu einer sogenannten Arm-Ebene **(11)** steht,
- der Unterarm **(6)** am Oberarm **(5)** verschwenkbar befestigt ist um eine zweite Haupt-Schwenkachse **(2),** die parallel zur ersten Haupt-Schwenkachse **(1)** verläuft und von dieser beabstandet ist,
- die Werkzeughand **(7)** am Unterarm **(6)** verschwenkbar befestigt ist um eine dritte Haupt-Schwenkachse **(3),** die parallel zu den ersten beiden Haupt-Schwenkachsen **(1, 2)** verläuft und von beiden beabstandet ist,
**dadurch gekennzeichnet, dass**
- entweder der Unterarm **(6)** relativ zum Oberarm **(5)** zusätzlich verschwenkbar ist um wenigstens eine Quer-Schwenkachse **(12),** die quer, insbesondere lotrecht, zur zweiten Haupt-Schwenkachse **(2)** verläuft und parallel zur Arm-Ebene **(11),**
- und/oder der Oberarm **(5)** relativ zur ersten Haupt-Schwenkachse **(1)** zusätzlich verschwenkbar ist um wenigstens eine Quer-Schwenkachse **(12),** die quer, insbesondere lotrecht, zur ersten Haupt-Schwenkachse (1) verläuft und parallel zur Arm-Ebene **(11).**

2. Roboter nach Anspruch **1,**
**dadurch gekennzeichnet, dass**
die ortsfeste Basis ein, insbesondere nur ein, ortsfest montierter Getriebekasten **(4)** ist, und die Bewegungen des Unterarmes **(6)** sowie der Werkzeughand (7) über exzentrisch an deren Haupt-Schwenkachsen **(2, 3)** angreifende Anlenkstreben (**14**a-f ) angesteuert werden, die mit dem Getriebekasten **(4)** wirkverbunden sind.
(Quer verschwenkbarer Oberarm, zu **Version IIb**)

3. Roboter nach einem der vorhergehenden Ansprüche,
**dadurch gekennzeichnet, dass**
der Oberarm (5) gegenüber der ersten Haupt-Schwenkachse **(1)** um wenigstens eine Quer-Schwenkachse **(12)** verschwenkbar ist, insbesondere indem
- entweder sich ein Quer-Schwenkzapfen sowohl in die als erste Haupt-Schwenkachse **(1)** dienende Getriebe-Abtriebswelle **(4a)** als auch in den Oberarm **(5)** hinein erstreckt, also ein Kreuzgelenk **(30)** gebildet wird,
- oder der Oberarm (5) aus zwei zu einem Parallelogramm miteinander verbundenen, in X-Richtung beabstandeten, Oberarm-Teilen (5a, b) besteht, die beide je um eine Querschwenkachse (12a, b) gegenüber dem Getriebekasten (4) oder einem schwenkbar am Getriebekasten (4) um die erste Hauptschwenkachse (1) verschwenkbaren Schulterkörper (36) verschwenkbar sind
- und insbesonderedie beiden Oberarmteile (5a, b) an ihrem vom Getriebekasten (4) wegweisenden Ende über das hintere Ende des Unterarmes (6) als erste Parallelogrammverbindung gelenkig miteinander verbunden sind und davon beabstandet in Richtung Getriebekasten (4) über eine weitere Parallelogrammstrebe (37) gelenkig miteinander verbunden sind.

4. Roboter nach einem der vorhergehenden Ansprüche,
**dadurch gekennzeichnet, dass**
- schwenkbar um die erste Hauptschwenkachse (1) in X-Richtung beabstandet zwei Antriebshebel (16a, b) um die erste Hauptschwenkachse (1) verschwenkbar sind, angetrieben von jeweils einem eigenen gesteuerten Motor (24a, b) und
- jeder der beiden Antriebshebel (16a, b) über ein Gelenk, insbesondere mittels je einer Schwenkplatte (35), mit einem der beiden Oberarmteile (5a, b) verbunden ist,
- wobei das Gelenk beabstandet sowohl zur ersten Hauptschwenkachse (1 a) als auch zur Querschwenkachse (12a oder b) dieses Oberarmteiles (5a, b) positioniert ist und
- insbesondere die Gelenke und Oberarmteile (5a, b) symmetrisch zur Armebene (11) angeordnet sind, die die Symmetrieebene durch das in Neutralstellung befindliche Parallelogramm, bestehend aus den beiden Oberarmteilen (5a, b), der Parallelogrammstrebe (12) und dem hinteren Ende des Unterarmes (6) gebildet wird, wenn die vier Gelenkpunkte des Parallelogramms ein Rechteck bilden und/oder die Parallelogrammstrebe (37) im rechten Winkel zur Armebene (11) verläuft.
(Getriebekasten)

5. Roboter nach einem der vorhergehenden Ansprüche,
**dadurch gekennzeichnet, dass**
- der Getriebekasten (4) aus zwei parallel zueinander in X-Richtung beabstandeten Getriebewangen (4.1, 4.2) sowie diese verbindende Querstreben (32) besteht, und in den insbesondere nach außen weisenden Hohlräumen der Getriebewangen (4.1, 4.2), die durch Getriebedeckel (31) verschließbar sind, jeweils ein Teil des Getriebes untergebracht ist,
- und insbesondere in jedem der Getriebewangen (4.1, 4.2) ein Wellenstumpf (33) in X-Richtung verlaufend und drehbar um diese erste Hauptschwenkachse (1) gelagert ist, die Getriebewangen (4.1, 4.2) zueinander fluchten und von der jeweiligen Getriebewange (4.1, 4.2) in Richtung der anderen Getriebewange (4.2, 4.1) weisen, ihre freien Enden jedoch zueinander in X-Richtung beabstandet sind..

6. Roboter nach einem der vorhergehenden Ansprüche,
**dadurch gekennzeichnet, dass**
- ein Schulterkörper (36) sich in Richtung der ersten Hauptschwenkachse (1), der X-Richtung, über beide Wellenstumpfe (5a, b) hinweg erstreckt und beide Wellenstumpfe (33a, b) drehbar um die erste Hauptschwenkachse (1) in diesem Schulterkörper (36) gelagert sind.
- und insbesondere betrachtet quer zur ersten Hauptschwenkachse (1) der Schulterkörper (36) U-förmig ausgebildet ist und die zur Mitte des darin gebildeten Freiraumes weisenden freien Enden der Wellenstumpfe (33a, b) in diesen Freiraum der U-Form hinein ragen und dort drehfest mit je einem Anlenkhebel (15a, b) verbunden sind, deren Verschwenken um die erste Hauptschwenkachse (1) eine Bewegung des Werkzeuggrundkörpers (7a) der Werkzeughand (7) relativ zum Unterarm (6) um die dritte Hauptschwenkachse (3) bewirkt, vermittelt insbesondere durch ein Hebelgestänge.

7. Roboter nach einem der vorhergehenden Ansprüche,
**dadurch gekennzeichnet, dass**
die Antriebshebel (15a, b), von denen einer den Unterarm (6) verschwenkt und der andere die Werkzeugaufnahme (23) im Werkzeug-Grundkörper (7a) verdreht, verschwenkbar sind durch Verdrehen des jeweiligen Wellenstumpfes (33a oder b) durch ein an seinem hinteren, in der jeweiligen Getriebewange (4.1, 4.2) befindliche, hintere Ende des Wellenstumpfes (33a, b), welches in Wirkverbindung mit einem der beiden Motore (24c, d) steht
und/oder
an dem Schulterkörper (36) das hintere Ende je eines der Oberarmteile (5a, b) verschwenkbar um die erste Querschwenkachse (12 a, b) befestigt ist.

8. Roboter nach einem der vorhergehenden Ansprüche,
**dadurch gekennzeichnet, dass**
- die Gestängeverbindung zwischen dem Antriebshebel (15 a) (15a) und der Werkzeugaufnahme (23) einen Anlenkhebel (15d) umfasst, der um die zweite Hauptschwenkachse (2) verschwenkbar ist und an dem jeweils außermittig je eine Anlenkstrebe (14e, 14b) angreifen, so dass ein Verschwenken des Antriebshebel (15a) ein Drehen der Werkzeugaufnahme (23) im Werkzeug-Grundkörper (7a) um eine im wesentlichen aufrechte Achse bewirkt
- und insbesondere der Unterarm (6) gegenüber dem Oberarm (5) verschwenkt wird mittels einer Anlenkstrebe (14c), die am einen Ende außermittig zur zweiten Hauptschwenkachse (2) am Unterarm (6) und mit dem anderen Ende außermittig zu der Abtriebswelle eines Motors (24c), die schwenkbar ist um die X-Achse, an dieser befestigt ist.
(Quer verschwenkbarer Unterarm, **Fig. 1 - 3 und 7 - 9)**
(Parallelogramm-Unterarm, **Fig. 1 - 3** = **Version IIa)**

9. Roboter nach einem der vorhergehenden Ansprüche,
**dadurch gekennzeichnet, dass**
- der Unterarm (6) aus zwei Unterarm-Teilen (**6**a, b) besteht, von denen jeder gegenüber einem der Lagerzapfen (**2**a, b) um eine quer zur zweiten Haupt-Schwenkachse **(2),** insbesondere lotrecht hierzu, verlaufende Quer-Schwenkachse (**12**a, b) verschwenkbar ist und
- die beiden anderen Enden der Unterarm-Teile (**6**a, b) über die Werkzeughand (**7**) miteinander verbunden sind, die beidseits über je eine Quer-Ausgleichsachse (**13**a, b) in einem der Unterarm-Teile (**6**a, b) gelagert ist und
- wobei die beiden Quer-Schwenkachsen (**12**a, b) und die beiden Quer-Ausgleichsachsen (**13**a, b) alle in die gleiche Richtung verlaufen und dadurch die beiden Unterarm-Teile (**6**a, b) ein Parallelogramm bilden,
- und insbesondere der mit dem jeweiligen Lagerzapfen (2a, b) drehfest verbundene Anlenkhebel (**15**a, b) in Dreh-Wirkverbindung steht mit einem mit der Quer-Schwenkachse (**12**a, b) des Unterarmes drehfest verbundenen Quer-Schwenkhebel (**17**a, b), wobei die Wirkverbindung insbesondere in einer Kegelzahnradpaarung besteht.

10. Roboter nach einem der vorhergehenden Ansprüche,
**dadurch gekennzeichnet, dass**
- der Grundkörper (**7**a) der Werkzeughand (**7**) schwenkbar um die dritte Haupt-Schwenkachse **(3)** angeordnet ist, indem zwischen den beiden Unterarm-Teilen (**6**a, b) und je einer Seite des Grundkörpers (**7**a) je ein Quer-Schwenkzapfen (**19**a, b) angeordnet ist, der jeweils
- um die dritte Haupt-Schwenkachse **(3)** gegenüber dem Grundkörper (**7**a) und
- um die Ausgleichs-Schwenkachsen (**13**a, b) gegenüber den Unterarm-Teilen (**6**a, b) drehbar ist; und
- eine Anlenkstrebe **(14d)** exzentrisch von der dritten Haupt-Schwenkachse (3) am Grundkörper (**7**a) angreift.
- und insbesondere die Anlenkstrebe (**14**d) am hinteren Ende an einem Anlenkhebel (**15**c) um die zweite Haupt-Schwenkachse **(2)** angreift und von diesem Anlenkhebel eine weitere Anlenkstrebe (**14**c) zum Getriebekasten (4) verläuft und dort insbesondere ortsfest befestigt ist
(Einteiliger Unterarm, **Fig. 7 - 9 = Version III)**

11. Roboter, bei dem der Unterarm (6) gegenüber dem Oberarm (5) um die Quer-Schwenkachse (12) verschwenkbar ist, nach einem der vorhergehenden Ansprüche,
**dadurch gekennzeichnet, dass**
- an der ortsfest montierten Basis, insbesondere einem Getriebekasten (4), in Richtung der ersten Haupt-Schwenkachse (1), der Längsrichtung (X), beabstandet zwei Antriebshebel (16c, d) unabhängig voneinander um eine parallel zur ersten Haupt-Schwenkachse (1) verlaufende, insbesondere mit der ersten Haupt-Schwenkachse (1) identische, erste Haupt-Antriebsachse (1')verschwenkbar befestigt sind,
- an jedem Antriebshebel (16c, d) beanstandet von der ersten Haupt-Antriebsachse (1') jeweils eine Anlenkstrebe (14g) mit ihrem einen Ende gelenkig befestigt ist, die mit ihrem anderen Ende gelenkig am Unterarm (6) beanstandet von der zweiten Haupt-Schwenkachse (2) befestigt ist, wobei betrachtet in Verlaufsrichtung des Unterarmes (6) die beiden Anlenkstrebe (14g) aus unterschiedlichen Angriffsrichtungen (41 a, b) am Unterarm (6) angreifen,
- der Unterarm (6) am Oberarm (5) gelenkig zusätzlich zur zweiten Haupt-Schwenkachse (2) um die Quer-Schwenkachse (12) befestigt ist,
- die Werkzeughand (7) am freien Ende des Unterarmes (6) gelenkig zusätzlich zur dritten Haupt-Schwenkachse (3) um eine parallel zur Quer-Schwenkachse (12) verlaufende Quer-Ausgleichsachse (13) befestigt ist.
- und insbesondere der Unterarm (6) wenigstens an seinem einen Ende, insbesondere an seinen beiden Enden, mittels eines Kardan-Gelenkes (44) oder eines Kugelgelenkes an dem Oberarm (5) auf der einen Seite und an der Werkzeughand (7) auf der anderen Seite beweglich befestigt ist.

12. Roboter nach einem der vorhergehenden Ansprüche,
**dadurch gekennzeichnet, dass**
- an dem vom Oberarm (5) abgewandten Ende des Unterarmes (6) das Kardan-Gelenk (44) ein Kardan-Mittelstück (43), insbesondere einen umlaufend geschlossenen Kardan-Rahmen (43), umfasst, der verschwenkbar um eine erste Kardan-Achse, die Quer-Ausgleichsachse (13), relativ zum Unterarm (6) verschwenkbar ist, und wobei die Werkzeughand (7) um eine zu der ersten Kardan-Achse im Winkel, insbesondere im rechten Winkel, angeordnete zweite Kardan-Achse, die dritte Haupt-Schwenkachse (3), verschwenkbar gegenüber dem Kardan- Mittelstück (43) befestigt ist und
- jeweils beabstandet zur ersten als auch zur zweiten Kardan-Achse (3, 13) um den Unterarm (6) herum vier zum Unterarm (6) parallel verlaufende Anlenkstreben (14h1 - 14h4) angeordnet sind, betrachtet in Verlaufsrichtung (6') des Unterarmes (6) hiervon jeweils eine in einem Quadranten zwischen den beiden sich kreuzenden ersten und zweiten Kardan-Achsen (3, 13), und die Anlenkstreben (14h1 - 14h4) mit einem Ende jeweils an der Werkzeughand (7) beanstandet zum Schnittpunkt der beiden Kardan-Achsen gelenkig befestigt sind.

13. Roboter nach einem der vorhergehenden Ansprüche,
**dadurch gekennzeichnet, dass**
- parallel zum Oberarm (5) verlaufend eine Anlenkstrebe (14c) vorhanden ist, die ebenfalls um eine parallel zur ersten Haupt-Schwenkachse (1) verlaufende Schwenkachse im Getriebekasten (4) gelagert ist und die freien Enden sowohl des Oberarmes (5) als auch die Anlenkstrebe (14c) mittels eines Anlenkhebels (15c) gelenkig verbunden sind, wodurch ein Gelenk-Parallelogramm vorliegt,
- an dem dem Oberarm (5) zugewandten Ende des Unterarmes (6) das Kardan-Gelenk (44) ein Kardan-Mittelstück (43), insbesondere einen umlaufend geschlossenen Kardan-Rahmen (43), umfasst, der verschwenkbar um eine erste Kardan-Achse , der Quer-Schwenkachse 12) relativ zum Unterarm (6) verschwenkbar ist, und wobei der Anlenkhebel (15c) um eine zu der ersten Kardan-Achse (12) im Winkel, insbesondere im rechten Winkel, angeordnete zweite Kardan-Achse , die zweite Haupt-Schwenkachse (2) verschwenkbar gegenüber dem Kardan- Mittelstück (43) befestigt ist,
- die anderen Enden der vier zum Unterarm (6) parallel verlaufenden Anlenkstreben (14h1 - 14h4) jeweils an dem Anlenkhebel (15c) gelenkig so befestigt sind, insbesondere über ein Doppel- Kardan-Gelenk, das in allen Stellungen des Roboterarmes (10) die Werkzeughand (7) parallel zum Anlenkhebel (15c) gehalten wird.

14. Roboter nach einem der vorhergehenden Ansprüche,
**dadurch gekennzeichnet, dass**
- die an der Werkzeughand (7) befestigte Werkzeug-Aufnahme (23) drehend antreibbar ist mittels einer entlang, insbesondere in, dem Unterarm (6) verlaufenden Antriebs-Welle (45), die von einem Werkzeug-Motor (24d) drehend antreibbar ist, welcher im Getriebekasten (4) angeordnet ist und die Antriebs-Welle (45) insbesondere über einen Zahnriemen (46) antreibt,
- und insbesondere in oder entlang der Anlenkstrebe (14c) ein Riemen, insbesondere ein Zahnriemen (46), umläuft, der vom Getriebekasten (4) aus angetrieben wird und an seinem anderen Ende mit einer sich in oder an dem Anlenkhebel (15c) in deren Verlaufsrichtung erstreckenden, drehbaren Zwischenfälle (47) wirkverbunden ist und diese wiederum mit der Antriebswelle (45) im Unterarm (6) wirkverbunden ist.

15. **Roboter-Straße,** mit
- wenigstens einem in X'-Richtung laufenden Produktband **(51),** auf dem Produkte (P) angeliefert werden,
- einer Ablagezone mit Ablagepositionen für die Produkte,
- einer in Durchlaufrichtung (X') des Produktebandes **(51)** und auf einem Niveau oberhalb des Produktbandes **(51)** verlaufenden Reihe von Robotern **(50)** gemäß einem der vorhergehenden Ansprüche,
**dadurch gekennzeichnet, dass**
die Roboter **(50)** mit ihren Armebenen **(11)** quer, insbesondere lotrecht, zur Durchlaufrichtung (X') des Produktbandes **(51)** angeordnet sind.

16. Roboter-Straße nach Anspruch **15,**
**dadurch gekennzeichnet, dass**
- die Ablagezone eine Behälterzone ist, in der die Trays (T), in die die Produkte (P) eingesetzt werden sollen, zur Verfügung stehen, insbesondere auf einem Trayförderer, insbesondere in Form eines Traybandes **(52)** oder einer Traykette oder in Form von die Trays tragenden, unabhängig voneinander verfahrbaren Tray-Fahrzeugen, und/oder
- der Getriebekasten **(4)** jedes Roboters **(50)** an der Unterseite eines aufgeständerten Roboterhimmels in Form von in Durchlaufrichtung (X') oder in horizontaler Querrichtung (Y') hierzu verlaufenden Tragstreben montiert sind.

17. Roboterstraße nach einem der Ansprüche **15** oder **16,**
**dadurch gekennzeichnet, dass**
bei zwei Ablagezonen, insbesondere Behälterzonen, seitlich beidseits des Produktbandes **(51)** und zwei Reihen von jeweils beidseits der Längsmitte des Produktbandes **(51)** angeordneten Reihen von Robotern **(50)** der Arbeitsbereich **(20)** jedes Roboters **(50)** mindestens die gesamte Breite des Produktbandes **(51)** abdeckt, insbesondere auch beide Ablagezonen, insbesondere Behälterzonen.

18. **Verfahren** zum Steuern eines Roboters mit einem Getriebekasten (4) und einem daran befestigten beweglichen Roboter-Arm (10), insbesondere nach einem der Ansprüche **1-13,** indem
- zum Bewegen der Werkzeughand (7) entlang eines definierten Weges in der Armebene **(11)** die Drehung des Oberarmes **(5)** um eine erste, zur Armebene (11) lotrecht stehende, Schwenkachse **(1)** und die Drehung des Unterarmes **(6)** um eine zweite Schwenkachse **(2),** die insbesondere parallel zur ersten Schwenkachse (1) liegt, gesteuert relativ zueinander vollzogen wird,
- zum Bewegen der Werkzeughand **(7)** aus der Armebene **(11)** heraus,
- entweder der Oberarm **(5)** gegenüber der ersten Haupt-Schwenkachse **(1)** um eine Quer-Schwenkachse **(12),** die quer zu den Hauptschwenkachsen (1, 2, 3) verläuft, verschwenkt wird und/oder
- der Unterarm **(6)** gegenüber dem Oberarm **(5)** um die Quer-schwenkachse **(12)** verschwenkt wird,
- zum Bewegen der Werkzeughand **(7)** relativ zum Oberarm **(6)** die Werkzeughand **(7)** aktiv um eine dritte Haupt-Schwenkachse **(3),** die insbesondere parallel zur ersten Hauptschwenkachse (1) verläuft, verschwenkt wird, und
- die beschriebenen Bewegungen gleichzeitig oder zeitlich überlappend durchgeführt werden,
- und insbesondere alle Bewegungen von Oberarm **(5),** Unterarm **(6)** und dem Grundkörper (**7**a) der Werkzeughand **(7)** von dem Getriebekasten **(4)** aus bewirkt werden.

19. Verfahren nach Anspruch 18,
**dadurch gekennzeichnet, dass**
- um die Abtriebswelle (**4**a) des Getriebekastens **(4)** herum konzentrisch ineinander Abtriebshülsen (**4**b,c) angeordnet sind, die relativ zueinander verdreht werden und an denen außerhalb des Getriebekastens **(4)** jeweils ein drehfest damit jeweils verbundener, radial abstrebender Antriebshebel (**16**a-c) abragt, mit dem die hinteren Enden der Anlenkstreben (**14**a-c) verbunden sind und/oder
- jede der Abtriebshülsen (**4**b, c) drehfest mit einem von mehreren axial hintereinander angeordneten Zahnrädern in Verbindung stehen, die jeweils von einem der drei Motoren (**24**a-c) über je ein Ritzel (**25**a-c) angetrieben werden.
